# EUROPEAN PATENT SPECIFICATION

(11) **EP 2 157 830 B1**
(45) Date of publication and mention of the grant of the patent: **14.06.2017**
(21) Application number: 09010192.4
(22) Date of filing: 06.08.2009
(51) Int. Cl.: H04W 76/04, H04W 36/08

(54) **METHODS AND SYSTEMS FOR DYNAMICALLY INDICATING A USER EQUIPMENT TO CHANGE DRX STATUS**
VERFAHREN UND SYSTEME ZUR DYNAMISCHEN ANZEIGE, DEN DRX-STATUS EINES BENUTZERGERÄTES ZU ÄNDERN
PROCÉDÉS ET SYSTÈMES POUR INDIQUER DYNAMIQUEMENT À UN ÉQUIPEMENT UTILISATEUR DE CHANGER D'ÉTAT DRX

(30) Priority: 22.08.2008 CN 200810144600
(43) Date of publication of application: 24.02.2010
(73) Proprietor: NTT DOCOMO, INC., Chiyoda-ku Tokyo 100-6150 (JP)
(72) Inventor: Du, Lei, Haidian District Beijing, 100190 (CN); Chen, Lan, Haidian District Beijing, 100190 (CN); Iwamura, Mikio, Yokosuka-shi Kanagawa 239-8536 (JP); Kadaba Anil, Umesh, Yokosuka-shi Kanagawa 239-8536 (JP)
(74) Representative: Zimmermann, Tankred Klaus

(56) References cited:
- EP-A- 1 944 985
- US-A1- 2008 181 127
- NOKIA CORPORATION ET AL: "Measurement configuration and reporting for E-UTRAN" 3GPP DRAFT; R2-080160, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sevilla, Spain; 20080108, 8 January 2008 (2008-01-08), XP050138040 [retrieved on 2008-01-08]
- 3GPP ORGANIZATIONAL PARTNERS (ARIB ET AL: "3GPP TS 36.300 V8.5.0 - 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)" INTERNET CITATION 15 May 2008 (2008-05-15), pages 47-66, XP002554087 Retrieved from the Internet: URL:http://www.3gpp.org/ftp/Specs/archive/ 36_series/36.300/36300-850.zip> [retrieved on 2008-05-01]
- RESEARCH IN MOTION LIMITED: "R2-071956, DRX Operation During Handover" INTERNET CITATION 11 May 2007 (2007-05-11), XP002450410 Retrieved from the Internet: URL:http://www.3gpp.org/ftp/tsg_ran/WG2_RL 2/TSGR2_58/Documents/R2-071956.zip> [retrieved on 2007-09-10]
- ERICSSON: "Handover Procedure for DRX Operation in LTE_ACTIVE" INTERNET CITATION vol. 3GPP TSG RAN WG2, 11 May 2007 (2007-05-11), XP002450411 Sorrento, Italy Retrieved from the Internet: URL:http://www.3gpp.org/ftp/tsg_ran/WG2_RL 2/TSGR2_56bis/Documents/R2-070043.zip> [retrieved on 2007-09-10]

## Description

### Field of the Invention

The present invention relates to method and apparatus for dynamically indicating a User Equipment (UE) to change a Discontinuous Reception (DRX) status, and more particularly, to a method and apparatus for dynamically adjusting, when the UE in a mobile communication system is in a connected status, the DRX status and relevant parameters of the UE.

### Background of the Invention

The 3rd Generation Partnership Project (3GPP), acting as an important organization in mobile communication field, greatly pushes the standardization of Third Generation (3G) techniques and has proposed a series of standards including Wide Code Division Multiple Access (WCDMA), High Speed Downlink Packet Access (HSDPA), High Speed Uplink Packet Access (HSUPA), etc. In order to face the challenges of broadband access techniques and meet the requirements of increasingly new services, 3GPP has initiated standardization of Long Term Evolution (LTE) at the end of 2004, so as to further increase frequency efficiency, improve performance of edge users, reduce system delay and provide access services with higher rate for high-speed mobile users, etc.

Along with the development of communication techniques towards mobility and broadband, power saving problem of mobile terminals has attracted widespread attention. Many communication standard organizations have considered the power saving problem when making relevant standards. In particularly, access networks of future mobile communication systems will be based on IP technique for data transmission. The burst of IP packets and the share of transmission channels among users make the data arrived at the UE discontinuous. Therefore, it becomes more important to save power of the UE.

In the mobile communication system, information exchange between the UE and a base station relies on power supply of both sides. As to mobile terminals generally supplied by batteries such as cell phone, lap top and Personal Digital Assistant (PDA), the power storage is rather limited. Therefore, how to lower power consumption and prolong standby and service time of the UE become a key problem for designing the mobile communication system.

In order to lower the power consumption of the UE, Discontinuous Reception (DRX) mode is employed in 3GPP standard. In particular, in the DRX mode, the UE monitors a channel and receives downlink services in a pre-defined time interval negotiated with the base station, thereby reducing unnecessary time for monitoring the channel and reducing power consumption of the UE. The DRX mode is also adopted by LTE. Compared with former standards of 3GPP, although the DRX mode in LTE has some minor differences on application status, channels and trigger conditions, operation procedures of the UE in the DRX mode are the same, both of them can be expressed by several particular parameters.

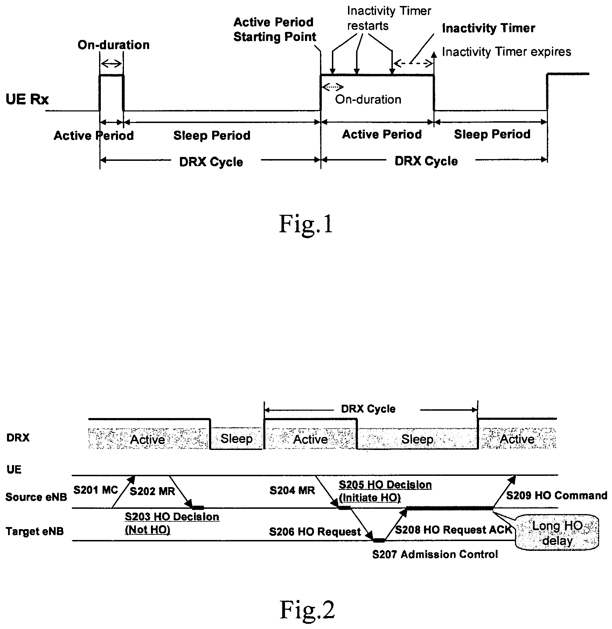

FIG.1 is a flowchart illustrating an operation procedure of a UE in the DRX mode. As shown in FIG.1, in the DRX mode, the UE is alternatively in an Active Period and a Sleep Period. The time interval between two consecutive Active period starting point is referred to as a DRX cycle. During the Active Period, the UE turns on its Receiver (Rx) to monitor information on a control channel and receive downlink data. While during the Sleep Period, the UE does not need to monitor the control channel and thereby saving power. In 3GPP TS 36.300, which is an overall description of LTE, DRX in RRC_CONNECTED is described and the following definitions are given:
- on-duration: duration in downlink subframes (the same as Transmission Time Interval, TTI) that the UE waits for, after waking up from DRX, to receive Physical Downlink Control Channels (PDCCHs). If the UE successfully decodes a PDCCH, the UE stays awake and starts an inactivity timer; otherwise, the UE enters into DRX Sleep status in a DRX configuration allowed situation.
- Inactivity timer: duration in downlink subframes that the UE waits to successfully decode a PDCCH, from the last successful decoding of the PDCCH, failing which it re-enters DRX. If the UE successfully decodes a PDCCH for a first transmission only (i.e. not for retransmissions), the UE stays awake and restarts the inactivity timer until informed to re-enter DRX by a Media Access Control (MAC) header or a control message and a DRX period is definitely indicated in the MAC payload; or the UE automatically re-enters DRX according to a pre-defined DRX period when the inactivity timer ends.
- Active time: total duration that the UE is awake, including the "on-duration" of the DRX cycle, the time UE is performing continuous reception while the inactivity timer has not expired and the time UE is performing continuous reception while waiting for a DL retransmission after one HARQ Round Trip time (RTT). The minimum active time is of length equal to "on-duration", and the maximum is undefined (infinite).

As to the above defined parameters, the on-duration and inactivity timer are of fixed lengths and informed to the UE by Evolved Universal Terrestrial Access Network NodeB (eNB), while the active time is of varying lengths based on scheduling decision and the success of UE PDCCH decoding.

Based on the above description to the DRX mode, the amount of the power of the UE saved during the DRX relies upon the length of the Active Period or the Sleep Period of the UE. When a DRX cycle is given, the shorter the Active Period, the shorter the time used for monitoring the channel and receiving data, which prolongs the Sleep Period and saves more power. While in case the Active Period is fixed, long DRX cycle also helps to prolong the Sleep Period, which further saves power. However, if the Sleep Period of the UE is too long, the system performance may be affected, especially when during Handover (HO) of the UE. Being in the Sleep Period, the UE may be unable to receive a Handover Command from a serving eNB in time, which results in long handover delay and degrades service quality of the UE.

FIG.2 is a schematic diagram illustrating the impact of the DRX mode of the UE to the HO. As shown in FIG.2, the UE alternatively monitors the control channel and receives data according to the rules shown in FIG.1. The eNB which has established a connection with the UE and provides services to the UE is referred to as a source eNB. The eNB which is to establish a connection with the UE and relay the source eNB to provide services to the UE is referred to as a target eNB.

The HO procedure is generally triggered by a Measurement Report (MR) of the UE. Firstly, the source eNB sends Measurement Configuration (MC) information to the UE (Step S201). For example, in LTE, the MC information may be sent through RRC CONNECTED RECONFIGURATION message defined by RRC specification of TS 36.331 (refer to 3GPP TS 36.331, Evolved Universal Terrestrial Radio Access (E-UTRA) Radio Resource control, Re18). The MC defines relevant information including measurement command, measurement type, measurement target, measurement amount, measurement report criteria and measurement interval. After receiving the MC information, the UE measures the channel according to requirements of the MC information and reports a measurement result to the source eNB through a Measurement Report (MR) (step S202, S204). The MR may be a periodical measurement report or event-triggered. For example, the MR may be triggered when it is detected that the Reference Signal Received Power (RSRP) is lower than a threshold. The source eNB determines whether an HO condition is met according to the MR. If the HO condition is not met, the source eNB performs nothing (step S203); otherwise, the source eNB issues an HO Request to the target eNB passing necessary information to prepare the HO at the target side (step S206). After receiving the HO Request, admission control may be performed by the target eNB (step S207) and an HO Request Ack is sent by the target eNB to the source eNB if the target eNB determines to accept the HO Request (Step S208). At last, the source eNB sends an HO Command to the UE (step S209). After receiving the HO Command, the UE begins to synchronize with the target eNB and establish a connection with the target eNB through a Random Access Channel (RACH).

For the UE in the DRX mode, if the UE is in a DRX Sleep Period, the source eNB has to wait for the UE to wake up again, that is, wait for the next DRX Active Period to send the HO Command. Therefore, the HO Command is delayed, which may cause a sustained decline in the link quality or even interruption of the link. Especially to delay-sensitive services, such as voice, the continuity of the service may be destroyed, thus giving rise to a serious decline in quality of service.

It can be seen from the above that, DRX and HO delay of UE are two inter-restricted aspects. On one hand, longer DRX Sleep Period is prefered to save power. On the other hand, the UE is expected to wake up in time to receive the HO Command. Since the UE is hard to know the time the source eNB sends the HO Command in advance, the UE generally needs to wake up earlier to wait for the HO Command, which brings out unnecessary power consumption.

To solve the above problems, a method is provided in the related art for reducing the HO delay through continuously monitoring the channel or following a shorter DRX cycle (refer to 3GPP R2-070043, Handover Procedure for DRX Operation in LTE_ACTIVE, Ericsson). In particular, the method is implemented through two manners: 1) DRX cycle adjustment after every MR; 2) DRX cycle adjustment after a specified event, this manner requires the network to configure and define the specified event.

Similarly, the related art also provides a method for reducing power consumption of the UE through keeping the UE continuously monitoring the channel or following a short DRX cycle after sending the MR (refer to 3GPP R2-071956, DRX Operation During Handover, Research in Motion Limited). In addition, since not every MR triggers an HO, the method further provides that the UE should be notified immediately by the source eNB to stop the unnecessary continuous channel monitoring or resume the previous long DRX cycle when it is decided by the source eNB that no HO is required. The above methods achieve a tradeoff between the power consumption and the HO delay through making the UE stop the DRX mode or adopt a short DRX cycle. However, the adjustment of the DRX mode by the UE is unfavorable for the network to control the status of the UE. In addition, the indication of no HO to the UE by the source eNB also brings out unnecessary overhead. Especially when most MRs do not trigger the HO, e.g., the MRs are directed to load balancing and congestion control, the efficiency of the method will decrease dramatically.

Currently, during the standardization of 3GPP LTE, Event Types which trigger an MR have been determined. There are three trigger events which can trigger an intra-frequency MR:
1) The link quality of the serving cell, e.g. RSRP, is higher than a threshold;
2) The link quality of the serving cell is lower than a threshold;
3) The sum of the link quality of a neighboring cell in the same frequency and an offset is higher than the link quality of the serving cell;

There are three trigger events for triggering an inter-frequency MR:
4) The link quality of a neighboring cell is higher than a threshold;
5) The link quality of the serving cell is lower than a threshold and the link quality of the neighboring cell is higher than a threshold;
6) The sum of the link quality of the neighboring cell with the same frequency and an offset is higher than the link quality of the serving cell.

There are two trigger events for triggering an inter-Radio Access Technology (inter-RAT) MR:
7) Link quality of cells with different RATs is higher than a threshold;
8) Link quality of the serving cell is lower than a threshold and link quality of cells with different RAT is higher than another threshold.

It can be seen from the different MR Event Types that, in some MRs, e.g. an intra-frequency MR triggered by event 1), the link quality of the serving cell is rather good and no HO is required. Even if under the circumstance that the link quality becomes worse and the HO is required, e.g., infra-frequency MRs triggered by events 2) and 3), the UE usually needs to continue monitoring the channel for some time, i.e. a hysteresis time, after the event is triggered. Only when a continuous drop of link quality is detected during the hysteresis time will the HO Request be sent. Thus, the UE will not receive the HO Request during the hysteresis time. Therefore, the immediate monitoring the channel or entering into short DRX cycle after the MR only brings about unnecessary power consumption and overhead for frequent sending of no-HO indication. In addition, service type of the UE also affects the status change of the DRX. For example, for voice services which are delay sensitive, it is possible to let the UE monitor the channel for a long time in order to ensure that the HO Command can be received in time; whereas for data services which are not delay-sensitive, it is favorable to let the UE stay in the DRX mode in order to save power.

In view of the above, there needs a method for dynamically adjusting the DRX mode, so that the UE and the network can know the change of DRX status of the UE, and adjust the DRX mode of the UE dynamically according to the possibility of HO, the type of the MR and/or the service type. Therefore, the power consumed for unnecessary monitoring the channel may be reduced for prolonging the service and standby time on the premise that the service quality of the user is ensured.

Document EP 1944985 A provides a method of DRX signaling in a long-term evolution infrastructure between an evolved node B (eNB) and user equipment (UE), the method comprising the steps of: providing a DRX value or coded DRX value in a header of a medium access control protocol data unit (MAC-PDU); and activating, deactivating or reconfiguring DRX based on the provided DRX value.

Document US 2008/181127 A1 provides a method for controlling discontinuous reception in a wireless transmit/receive unit includes defining a plurality of DRX levels, wherein each DRX level includes a respective DRX cycle length and transitioning between DRX levels based on a set of criteria. The transitioning may be triggered by implicit rules.

Document NOKIA CORPORATION ET AL: "Measurement configuration and reporting for E-UTRAN" 3GPP DRAFT, R2-080160, it relates to what parameters are required to configure measurements, reporting events and reporting.

Document "3GPP TS 36.300 V8.5.0-3rd Generation Partnership Project; Technical Specification Group Radio Access Network; Evolved Universal Terrestrial Radio Access (E-UTRA) and Evolved Universal Terrestrial Radio Access Network (E-UTRA); Overall description; Stage 2 (Release 8)", it describes that measurements to be performed by a UE for intra/inter -frequency mobility can be controlled by E-UTRAN using broadcast or dedicated control, and that immediately after sending a measurement report, the UE may change its DRX. This mechanism would be preconfigured by the eNB.

### Summary

The present invention is to provide a method and apparatus for dynamically indicating a User Equipment (UE) to change Discontinuous Reception (DRX) status. In the method and apparatus provided by the present invention, the DRX status of the UE may be indicated by a network or the UE, or according to a DRX status determination mode pre-defined between the network and the UE, so that the network may be aware of the dynamic change of the DRX status of the UE, thereby facilitating the network to control the DRX status of the UE and reducing power consumption of the UE.

According to one aspect of the present invention, a method for dynamically indicating the UE in connected status to change DRX status is provided. The method includes:
selecting, by an eNB, a preferred DRX status that the eNB prefers for the UE according to a pre-defined condition, and sending Measurement Configuration (MC) information containing information indicating the preferred DRX status to the UE when determining that the DRX status of the UE needs to be changed;
measuring a channel by the UE in response to the MC information received, and changing the DRX status of the UE according to the preferred DRX status indicated by the MC information after sending a Measurement Report (MR) to the eNB;
wherein the pre-defined condition comprises: a link quality of a serving cell;
wherein when the eNB detects that the link quality of the serving cell is higher than a first threshold N1, determining by the eNB that the UE should follow a long DRX cycle, and the changing the DRX status of the UE to the preferred DRX status comprises: following the long DRX cycle by the UE;
when the eNB detects that the link quality of the serving cell is lower than a second threshold N2 but higher than a third threshold N3, determining by the eNB that the UE should follow a short DRX cycle and the changing the DRX status of the UE to the preferred DRX status comprises: following the short DRX cycle by the UE;
when the eNB detects that the link quality of the serving cell is lower than the third threshold N3, determining by the eNB that the UE should stay awake;
wherein N1>N2 ≥N3, and N2 and N3 are configured according to delay sensitivity of a service.

According to another aspect of the present invention, a system for dynamically indicating the UE in connected status to change DRX status is provided. The system includes:
means configured at a eNB and means configured at the UE; wherein means configured at the eNB comprises:
   a DRX status determination unit, adapted to determine a preferred DRX status for the UE according to a pre-defined condition;
   a DRX status indication unit, adapted to send the preferred DRX status to the UE through a first transmitting/receiving unit;
   a DRX status register, adapted to store information corresponding to the UE; and
   the first transmitting/receiving unit, adapted to transmit information to and receive information from the UE; and
   means configured at the UE comprises:
      a DRX status indication detecting unit, adapted to detect information received from a second transmitting/receiving unit for information indicating the preferred DRX status of the UE;
      a DRX status updating unit, adapted to update the current DRX status of the UE according to the information indicating the preferred DRX status of the UE; and
      the second transmitting/receiving unit, adapted to transmit information to and receive information from the eNB;
      wherein the pre-defined condition comprises: a link quality of a serving cell;
      wherein when the DRX status determination unit of the eNB detects that the link quality of the serving cell is higher than a first threshold N1, the DRX status determination unit of the eNB is configured to determine that the UE should follow a long DRX cycle, and the DRX status updating unit of the UE is configured to update the DRX status of the UE to the long DRX cycle;
      when the DRX status determination unit of the eNB detects that the link quality of the serving cell is lower than a second threshold N2 but higher than a third threshold N3, the DRX status determination unit of the eNB is configured to determine that the UE should follow a short DRX cycle and the DRX status updating unit of the UE is configured to update the DRX status of the UE to the short DRX cycle;
      when the DRX status determination unit of the eNB detects that the link quality of the serving cell is lower than the third threshold N3, the DRX status determination unit of the eNB determines that the UE should stay awake;
      wherein N1>N2≥N3, and N2 and N3 are configured according to delay sensitivity of a service.

According to another aspect of the present invention, a method for dynamically indicating the UE in connected status to change DRX status is provided. The method includes:
sending, by an eNB, Measurement Configuration (MC) information to the UE according to a pre-defined condition, wherein the MC information includes information for instructing the UE to indicate in a Measurement Report (MR) a preferred DRX status of the UE;
measuring a channel by the UE in response to the MC information received, determining a preferred DRX status of the UE and sending to the eNB an MR including information for indicating the preferred DRX status of the UE, and updating to the preferred DRX status;
updating, by the eNB, the DRX status of the UE stored in a DRX status register according to the preferred DRX status received from the UE;
wherein when the UE detects that the link quality of the serving cell is higher than a first threshold N1, determining by the UE that the UE should follow a long DRX cycle, and the updating by the UE the DRX status of the UE to the preferred DRX status comprises: updating the DRX status of the UE to the long DRX cycle by the UE;
when the UE detects that the link quality of the serving cell is lower than a second threshold N2 but higher than a third threshold N3, determining by the UE that the UE should follow a short DRX cycle and the updating by the UE the DRX status of the UE to the preferred DRX status comprises: updating the DRX status of the UE to the short DRX cycle by the UE;
when the UE detects that the link quality of the serving cell is lower than the third threshold N3, determining by the UE that the UE should stay awake;
wherein N1>N2≥N3, wherein N2 and N3 are configured according to delay sensitivity of a service.

According to another aspect of the present invention, a system for dynamically indicating the UE in connected status to change DRX status is provided. The system includes:
means configured at an eNB and means configured at the UE; wherein means configured at the eNB comprises:
   a DRX status indication informing unit, adapted to inform the UE to report information related to a preferred DRX status of the UE;
   a DRX status updating unit, adapted to update a DRX status stored in a DRX status register using the preferred DRX status received from the UE;
   the DRX status register, adapted to store information corresponding to the UE; and
   a first transmitting/receiving unit, adapted to transmit information to and receive information from the UE; and
   means configured at the UE comprises:
      a DRX status determining and adjusting unit, adapted to determine the preferred DRX status of the UE according to a DRX status determination mode, and adjust the DRX status of the UE according to a determined result;
      a DRX status indicating unit, adapted to send the preferred DRX status to the eNB through a second transmitting/receiving unit;
      the second transmitting/receiving unit, adapted to transmit information to and receive information from the eNB;
      wherein when the DRX status determining and adjusting unit of the UE detects that the link quality of the serving cell is higher than a first threshold N1, the DRX status determining and adjusting unit of the UE is configured to determine that the UE should follow a long DRX cycle, and update the DRX status of the UE to the long DRX cycle;
      when the DRX status determining and adjusting unit of the UE detects that the link quality of the serving cell is lower than a second threshold N2 but higher than a third threshold N3, the DRX status determining and adjusting unit of the UE is configured to determine that the UE should follow a short DRX cycle and update the DRX status of the UE to the short DRX cycle;
      when the DRX status determining and adjusting unit of the UE detects that the link quality of the serving cell is lower than the third threshold N3, the DRX status determining and adjusting unit of the UE is configured to determine that the UE should stay awake;
      wherein N1≥N2≥N3, N2 and N3 are configured according to delay sensitivity of a service.

According to another aspect of the present invention, a method for dynamically indicating the UE in connected status to change DRX status is provided. The method includes:
sending, by an eNB, Measurement Configuration (MC) information to the UE according to a pre-defined condition;
measuring a channel by the UE in response to the MC information received, sending a measurement result to the eNB, and determining a preferred DRX status of the UE according to the measurement result and a DRX status determination mode which is respectively pre-stored at the eNB and the UE;
determining, by the eNB, a current DRX status of the UE according to the measurement result and the pre-stored DRX status determination mode, and updating the DRX status of the UE stored in the DRX status register using the current DRX status of the UE;
wherein when the eNB and the UE detect that the link quality of the serving cell is higher than a first threshold N1, determining by the eNB and the UE that the UE should follow a long DRX cycle, and following the long DRX cycle by the UE;
when the eNB and the UE detect that the link quality of the serving cell is lower than a second threshold N2 but higher than a third threshold N3, determining by the eNB and the UE that the UE should follow a short DRX cycle and following the short DRX cycle by the UE;
when the eNB and the UE detect that the link quality of the serving cell is lower than the third threshold N3, determining by the eNB and the UE that the UE should stay awake;
wherein N1>N2≥N3, N2 and N3 are configured according to delay sensitivity of a service.

According to another aspect of the present invention, a system for dynamically indicating the UE in connected status to change DRX status is provided. The system includes:
means configured at an eNB side and means configured at the UE side; wherein means configured at the eNB side comprises:
   a DRX status determination unit, adapted to receive information from the UE through a first transmitting/receiving unit, determine a preferred DRX status for the UE according to a DRX status determination mode which is respectively pre-stored at the eNB and the UE, and store a determined result in information corresponding to the UE in a DRX status register;
   the DRX status register, adapted to store the information corresponding to the UE; and
   the first transmitting/receiving unit, adapted to transmit information to and receive information from the UE;
   means configured at the UE side comprises:
      a DRX status determining and adjusting unit, adapted to determine the preferred DRX status of the UE according to a measurement result and the DRX status determination mode which is respectively pre-stored at the eNB side and the UE side, and send a measurement report to the eNB through a second transmitting/receiving unit; and
      the second transmitting/receiving unit, adapted to transmit information to and receive information from the eNB;
      wherein when the DRX status determination unit of the eNB and the DRX status determining and adjusting unit of the UE detect that the link quality of the serving cell is higher than a first threshold N1, the DRX status determination unit of the eNB and the DRX status determining and adjusting unit of the UE are configured to determine that the UE should follow a long DRX cycle, and the DRX status determining and adjusting unit of the UE is configured to follow the long DRX cycle;
      when the DRX status determination unit of the eNB and the DRX status determining and adjusting unit of the UE detect that the link quality of the serving cell is lower than a second threshold N2 but higher than a third threshold N3, the DRX status determination unit of the eNB and the DRX status determining and adjusting unit of the UE are configured to determine that the UE should follow a short DRX cycle and the DRX status determining and adjusting unit of the UE is configured to follow the short DRX cycle;
      when the DRX status determination unit of the eNB and the DRX status determining and adjusting unit of the UE detect that the link quality of the serving cell is lower than the third threshold N3, the DRX status determination unit of the eNB and the DRX status determining and adjusting unit of the UE are configured to determine that the UE should stay awake;
      wherein N1>N2≥N3, N2 and N3 are configured according to delay sensitivity of a service.

In the methods provided by the present invention, the change of the DRX status of the UE may be dynamically indicated. The DRX status of the UE is dynamically adjusted based on measurement event types, link quality and service types, etc., which reduces time for unnecessary monitoring the channel on the promise that the service quality of the user is ensured, thereby improving HO delay performance, reducing power consumption of the UE and effectively prolonging service and standby time of the UE.

### Brief Description of the Drawings

Preferred embodiments of the present invention will be described hereinafter with reference to accompanying embodiments and drawings to make the above mentioned objectives and other objectives, features and merits of the present invention clearer, wherein
FIG. 1 is a schematic diagram illustrating an operation procedure of the UE in the DRX mode;
FIG.2 is a schematic diagram illustrating the UE in the DRX mode having bad effects to inter-cell HO;
FIG.3 is a block diagram for implementing between the eNB and the UE the dynamic indication of the UE to change DRX status according to a first embodiment of the present invention;
FIG.4a and FIG.4b are diagrams showing indication information for indicating the DRX status of the UE taken one bit and two bits as examples, respectively;
FIG.5 is a schematic diagram of an operation procedure for indicating the UE by the eNB to change the DRX status according to the first embodiment of the present invention;
FIG.6 is a block diagram for implementing between the eNB and the UE the dynamic indication of the UE to change the DRX status according to a second embodiment of the present invention;
FIG. 7 is a schematic diagram illustrating an operation procedure of indicating the eNB to change the DRX status by the UE according to the second embodiment of the present invention;
FIG.8 is a block diagram for implementing between the eNB and the UE the dynamic indication of the UE to change the DRX status according to a third embodiment of the present invention;
FIG.9 shows an example of a DRX status determination mode of the present invention;
FIG.10 is a schematic diagram illustrating an operation procedure for dynamically adjusting the DRX status of the UE through setting the same DRX status determination mode at the UE and the network side; and
FIG.11 shows another example of a DRX status determination mode of the present invention.

### Embodiments of the Invention

Embodiments of the present invention will be described in detail hereinafter with reference to the accompanying drawings. Unnecessary details and functions are omitted in the description to prevent confusion of the understanding of the present invention.

Preferred embodiments of the method and apparatus for dynamically indicating the UE to change DRX status are described hereinafter with reference to the accompanying drawings.

### (The first embodiment)

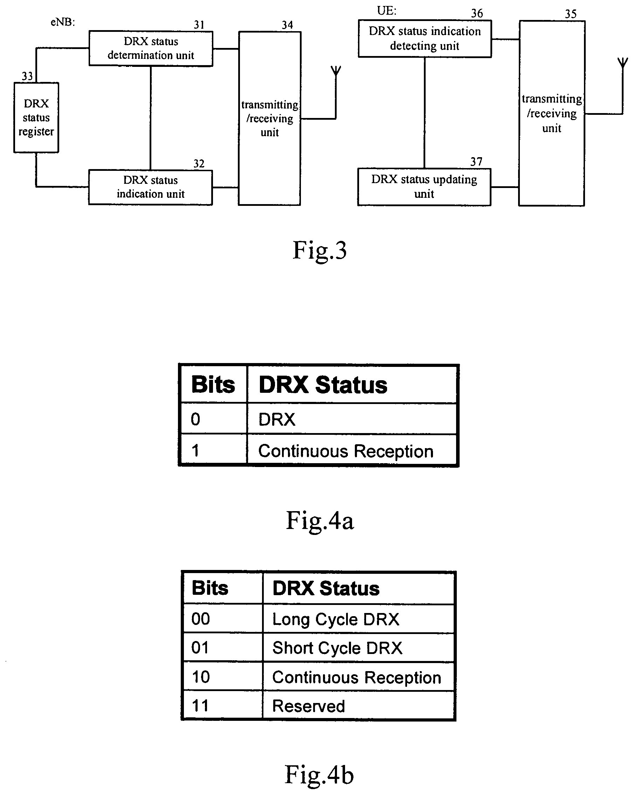

FIG.3 shows a block diagram for implementing between the eNB and the UE dynamic indication of the UE to change the DRX status according to the first embodiment of the present invention. In order to achieve the objective of dynamically indicating the UE to change the DRX status, according to the first embodiment of the present invention, the network side (for example eNB, i.e. eNodeB) is configured with a DRX status determination unit 31, a DRX status indicating unit 32, a DRX status register 33 and a transmitting/receiving unit 34 as shown in FIG.3. The UE is equipped with a transmitting/receiving unit 35, a DRX status indication detecting unit 36 and a DRX status updating unit 37.

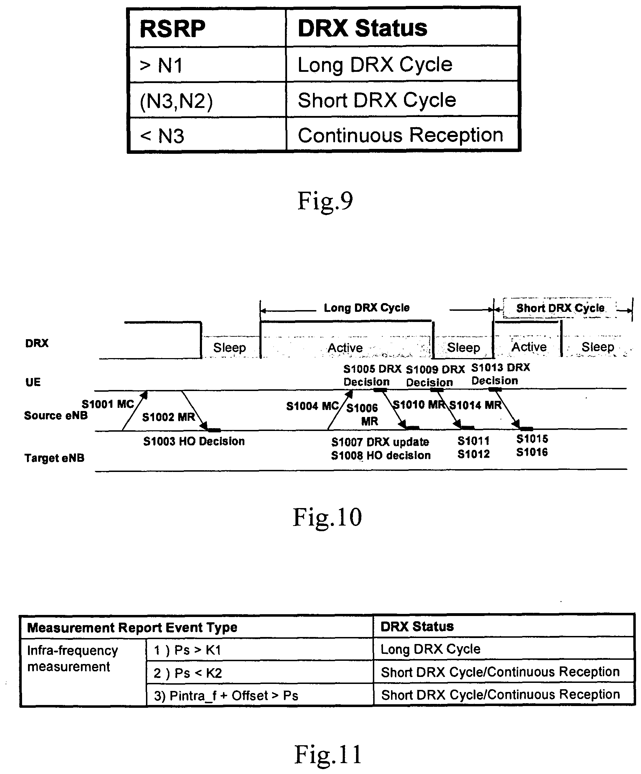

At the eNB side, the DRX status determination unit 31 determines, according to a pre-defined DRX status determination mode, a preferred DRX status for the UE, and stores the determined result into information corresponding to the UE in the DRX status register 33. The DRX status determination mode may be, but is not limited to, determination modes as shown in FIG.9 and FIG.11 (which will be described in detail later). It is also possible to determine the preferred DRX status for the UE according to other pre-defined conditions during communication. In addition, the DRX status determination unit 31 also provides the determined result to the DRX status indicating unit 32 and provides the determined result to the UE through the transmitting/receiving unit 34.

Alternatively, the DRX status determination unit 31 may also compare the preferred status with a DRX status stored in the DRX status register 33. If the preferred status and the DRX status stored in the DRX status register 33 are different, update the DRX status register 33. In addition, the DRX status determination unit 31 also provides the determined result to the DRX status indicating unit 32 and provides the determined result to the UE through the transmitting/receiving unit 34. The DRX status register 33 stores and updates current DRX status information of all UEs connected with the eNB. The DRX status indicating unit 32 sends the preferred DRX status to the UE through the transmitting/receiving unit 34 according to the indication of the DRX status determination unit 31. Alternatively, the DRX status indicating unit 32 may also send, under the indication of the DRX status determination unit 31 and the DRX status register 33, the preferred DRX status to the UE through the transmitting/receiving unit 34 when information stored in the DRX status register 33 requires updating. For instance, the preferred DRX status may be contained in MC information to be sent to the UE. However, the present invention is not limited to this. The DRX status information may also be contained in other information to be sent to the UE and is sent to the UE together with the corresponding information. The transmitting/receiving unit 34 transmits information to and receives information from a wireless interface.

At the UE side, the transmitting/receiving unit 35 receives information containing the DRX status indication, such as MC information, from the eNB, decodes the information and sends the decoded information to the DRX status indication detecting unit 36. The DRX status indication detecting unit 36 detects whether the information received from the transmitting/receiving unit 35 contains the DRX status indication, and provides the DRX status indication information to the DRX status updating unit 37 if determining that the information contains the DRX status indication. The DRX status updating unit 37 receives the DRX status indication information from the DRX status indication detecting unit 36 and updates the DRX status of the UE according to the DRX status indication information. The transmitting/receiving unit 35 transmits information to and receives information from a wireless interface.

In this embodiment, the preferred DRX status of the UE is determined by a source eNB. And the source eNB sends the DRX status indication information to the UE when the DRX status of the UE needs to be changed. The DRX status indication information may be contained in information to be sent to the UE, e.g. the MC information. Herein, n bits may be used for denoting 2*ⁿ* different preferred DRX statuses of the UE. More preferred DRX statuses to be denoted, more bits are required. In other words, the higher the control accuracy is required, the greater the system overhead arises. For instance, the preferred DRX status may include: DRX status, continuous reception status, long DRX cycle, short DRX cycle, etc.

FIG.4a and FIG.4b show examples of the DRX status indication information wherein one or two bits are used for denoting the DRX status of the UE. FIG.4a shows the DRX status indication information wherein one bit is used for denoting the DRX status of the UE. FIG.4b shows the DRX status indication information wherein two bits are used for denoting the DRX status of the UE. In case one bit is used, as shown in FIG.4a, "0" may be used for indicating DRX of the UE and "1" may be used for indicating continuous reception (i.e. continuous monitoring the channel and receiving data) of the UE. It should be noted that the present invention is not limited to this, bit "0" may also be used as indication information of continuous reception of the UE and bit "1" be used as indication information of DRX of the UE. And other express manners may also be used without departing from the principle of the present invention.

FIG.4b shows the indication information wherein two bits are used for denoting four kinds of DRX statuses of the UE. Generally, a wireless communication system may define two kinds of DRX cycles. The user may determine to follow a DRX cycle through receiving MC information from the network. For example, "00" may be used as indication information for indicating the UE to follow a long DRX cycle, "01" may be used to indicate the UE to follow a short DRX cycle, bits "10" may be used as indication information for indicating the UE to stay awake and "11" may be reserve for other purposes.

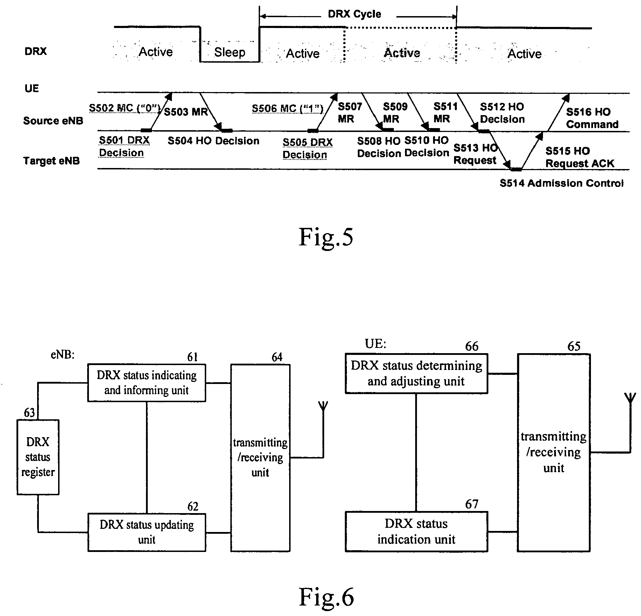

FIG.5 is a schematic diagram illustrating an operation procedure of indicating the UE to dynamically change the DRX status by the eNB. In this embodiment, one bit is used for indicating the DRX status of the UE. It should be noted that the present invention is not limited to this. Two bits or other manners may be used for indicating the DRX status of the UE. As shown in FIG.5, in step S501, the source eNB determines a preferred DRX status for the UE, and sends MC information to the UE when the DRX status of the UE needs to be changed (step S502). The MC information contains information for indicating the DRX status of the UE.

After receiving the MC information containing the information indicating the DRX status of the UE, the UE adjusts the DRX status of itself according to the indication information. As shown in step S502 of FIG.5, suppose the indication information of the DRX status received by the UE is "0", e.g., when detecting that a link quality of a serving cell is higher than a threshold, the source eNB determines that the UE should enter DRX mode. In step S503, after responding to the MC information and the DRX status indication information sent by the source eNB, the UE sends a MR to the source eNB and enters the DRX. After receiving the MR from the UE, the source eNB determines whether an HO to another eNB is required (step S504). If the source eNB determines that no HO is required, no operation is performed by the source eNB.

Similarly, in step S505, when the source eNB determines that the DRX status of the UE should be changed, e.g., when detecting the link quality of the serving cell is lower than a threshold, the source eNB sends the MC information containing the DRX status indication information set as "1" to the UE (step S506). After receiving the MC information, the UE starts to measure the channel according to the MC information and sends a MR to the source eNB (step S507). After sending the MR, the UE changes the DRX status of the UE to continuous reception and starts to continuously monitor the channel according to the DRX status indication information "1". If the MC information sent by the source eNB indicates the UE to send the MR periodically for a period of time, the UE sends the MR to the source eNB periodically according to the MC information (step S507, S509, S511). After receiving each MR, the source eNB determines whether an HO condition is met (step S508, S510, S512), and sends an HO Request to a target eNB if all the MRs meet the HO condition during the period of time. Thereafter, the target eNB performs admission control (step S514), and sends an HO Request ACK to the source eNB if the HO Request can be admitted (step S515). Since the UE has received in step S506 the DRX status indication information from the source eNB which indicates the UE to enter the continuous reception status, the source eNB may send the HO Command to the UE immediately (step S516), so as to avoid the HO delay of the UE.

In addition, the source eNB may indicate the UE to change the DRX status according to the measurement report event type, measurement result or service type. For instance, it is possible to indicate the DRX status of the UE according to the DRX determination mode (as shown in FIG.9 and FIG.11, which will be described in detail later).

### (Second embodiment)

FIG.6 is a block diagram for implementing between the eNB and the UE the dynamic indication of the UE to change the DRX status. The second embodiment for implementing between the eNB and the UE the dynamic indication of the UE to change the DRX status of the present invention is described hereinafter with reference to FIG.6.

According to the second embodiment, as shown in FIG.6, the network side (eNB: eNodeB) is configured with a DRX status indication informing unit 61, a DRX status updating unit 62, a DRX status register 63 and a transmitting/receiving unit 64. The UE is equipped with a transmitting/receiving unit 65, a DRX status determining and adjusting unit 66 and a DRX status indication unit 67.

At the eNB side, the DRX status indication informing unit 61 may inform the UE to report information about the DRX status of the UE according to pre-defined conditions. For instance, the inform information may be contained in the MC information and sent to the UE together with the MC information by the transmitting/receiving unit 64. As stated in the first embodiment, the present invention is not limited to this. The inform information may also be contained in other information to be sent to the UE and sent to the UE together with the other information. The DRX status updating unit 62 receives the DRX status indication information from the UE through the transmitting/receiving unit 64 and stores the DRX status indication information in the DRX status register 63. Alternatively, the DRX status updating unit 62 may update the DRX status information stored in the DRX status register 63 using the DRX status indication information received if the DRX status information stored in the DRX status register 63 is different from the DRX status indication information received.

At the UE side, the DRX status determining and adjusting unit 66 determines an expected DRX status of the UE according to the DRX status determination mode, adjusts the DRX status of the UE according to a determined result, provides the determined result to the DRX status indication unit 67 and provides the determined result to the eNB through the transmitting/receiving unit 65. Herein, the DRX status determination mode may be as shown in FIG.9 and FIG. 11 (which will be described in detail later). Nevertheless, the present invention is not limited to this. Other pre-defined conditions may also be used for determining the expected DRX status.

Alternatively, when the expected DRX status determined by the DRX status determining and adjusting unit 66 is different from the current DRX status of the UE, the UE adjusts the DRX status of itself and provides the determined result to the DRX status indication unit 67. The DRX status indication unit 67 sends the expected DRX status information to the eNB through the transmitting/receiving unit 65 according to the indication of the DRX status determining and adjusting unit 66. The expected DRX status information may be contained in information to be sent to the eNB, such as the MR information.

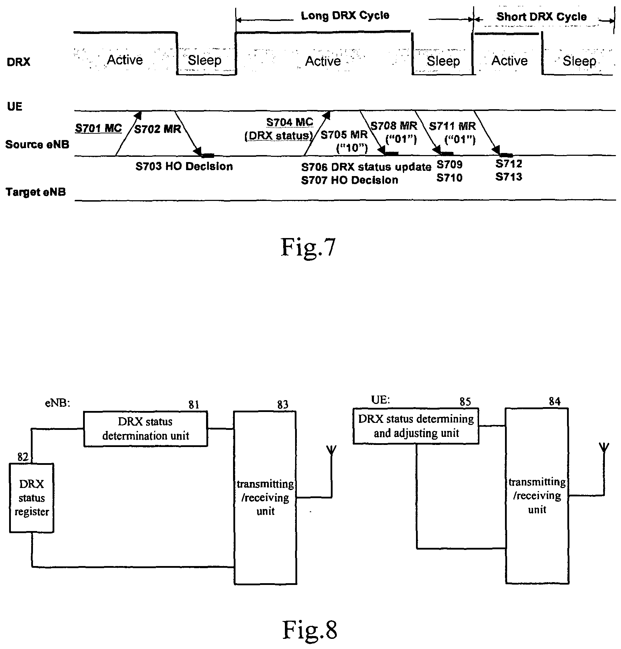

FIG.7 is a schematic diagram illustrating an operation procedure for informing the eNB by the UE to dynamically change the DRX status of the UE. In this embodiment, two bits are used for indicating the DRX status of the UE. In FIG.7, steps S701-S703 are general measurement procedure and are similar to steps S201-203 shown in FIG.2. In step S701, the UE receives MC information from the source eNB. In step S702, the UE measures the channel and sends an MR to the source eNB according to the MC information. In step S703, the source eNB determines whether an HO to a neighboring cell is required according to the MR.

Thereafter, in step S704, the source eNB may send updated MC information to the UE according to pre-defined conditions. The MC information includes information for demanding the UE to indicate the DRX status of the UE in subsequent MRs. After receiving the MC information, the UE may determine the expected DRX status of the UE according to the DRX status determination mode. For example, when detecting the link quality of the serving cell falls below a threshold, the UE may determine to continuously monitor the channel and contain information indicating the DRX status into the MR to be sent to the source eNB, wherein the information is shown in FIG.4b as "10". After receiving the MR, the source eNB detects that the MR contains information indicating the DRX status of the UE. At this time, the source eNB detects that the information indicating the DRX status of the UE is "10". Thus the source eNB knows that the UE will continuously monitor the channel. As such, the source eNB updates records about the DRX status of the UE stored in the DRX status register 63 of the source eNB (step S706). Thereafter, the source eNB determines whether an HO to a neighboring cell is required according to the MR received (step S707).

Similarly, the UE determines whether the UE itself should adopt a short DRX cycle during subsequent measurement procedure. For example, when detecting that the link quality goes well, the UE may determine to adopt the short DRX cycle. Then the UE indicates the DRX status as "01" in the MR (step S708, S711) and starts with the short DRX cycle for discontinuous reception. When detecting that the DRX status of the UE stored in the DRX status register 63 is inconsistent with the DRX status indicated in the information contained in the MR received from the UE, the source eNB updates the DRX status stored in the DRX status register 63 with the DRX status indicated by the UE (step S709, S712), and determines whether an HO to the neighboring cell is required (step S710, S713).

Herein, for instance, the information indicating the DRX status of the UE may be carried by each MR sent to the source eNB, or be carried only in the MR which is sent to the source eNB when the DRX status of the UE requires changing. FIG.7 shows an example wherein the information indicating the DRX status is carried by each MR sent to the source eNB. If the information indicating the DRX status of the UE is carried only by the MR which is sent to the source eNB when the DRX status of the UE requires changing, there is no need for the MR in step S711 to indicate the DRX status of the UE again so as to save overhead.

### (The third embodiment)

FIG.8 is a block diagram for implementing between the source eNB and the UE dynamic indication of the UE to change the DRX status of the UE. The third embodiment for implementing the dynamic indication of the UE to change the DRX status is described hereinafter with reference to FIG.8.

According to the third embodiment, as shown in FIG.8, the network side (eNB: eNodeB) is configured with a DRX status determination unit 81, a DRX status register 82 and a transmitting/receiving unit 83. The UE is equipped with a transmitting/receiving unit 84 and a DRX status determining and adjusting unit 85.

At the eNB side, the eNB may send MC information to the UE according to pre-defined conditions in the network. The UE responds to the MC information and measures the channel. The DRX status determination unit 81 at the eNB side receives UE information, e.g. measurement information, sent by the transmitting/receiving unit 84 of the UE, determines a preferred DRX status for the UE according to the DRX status determination mode, and stores the preferred DRX status in information corresponding to the UE in the DRX status register 82. As described in the first and second embodiments of the present invention, the DRX status determination mode may be as shown in FIG.9 and FIG.11 (which will be described in detail later). However, the present invention is not limited to this. The preferred DRX status may also be determined according to other pre-defined conditions in the communication procedure. At the UE side, the DRX status determining and adjusting unit 85 determines the preferred DRX status of the UE according to the same DRX status determination mode as the DRX status determination unit 81 in the eNB. After sending the MR information to the source eNB through the transmitting/receiving unit 84, the UE adjusts the DRX status of the UE according to the determined result. After receiving the MR information from the UE, the DRX status determination unit 81 determines the DRX status of the UE and updates the DRX status of the UE in the DRX status register 82 with the determined result.

In order to reduce additional overhead, in the third embodiment, the preferred DRX status of the UE may be determined through matching the MR in both the UE and the eNB instead of indication information, so as to reduce the additional overhead brought out by the information for indication of the DRX status of the UE. As such, in the third embodiment of the present invention, the same DRX status determination mode needs to be configured at the UE and the network side. In other words, the same pre-defined conditions are configured at the UE and the network side. When a pre-defined condition is met, the DRX status corresponding to the pre-defined condition is selected.

FIG.9 shows an example of the DRX status determination mode. According to this mode, the preferred DRX status of the UE is determined according to the RSRP of the serving cell detected by the UE, or together with the service type. For example, when the UE detects that the RSRP of the serving cell is higher than a pre-defined threshold N1, it is determined that the UE should follow a long DRX cycle. When the UE detects that the RSRP of the serving cell is lower than a pre-defined threshold N2 but higher than another pre-defined threshold N3, it is determined that the UE should follow a short DRX cycle. When the UE detects that the RSRP of the serving cell is lower than the pre-defined threshold N3, it is determined that the UE should continuously monitor the channel, wherein N1>N2≥N3.

In addition, parameters in the DRX status determination mode may be configured according to different service types. For example, for voice services, it may be configured that N2=N3. Thus, once the UE detects the drop of the link quality and the possibility of the HO, the UE may begin to continuously monitor the channel, thereby ensuring the HO being performed in time. In addition, as to non-real time services which are not delay-sensitive, it is possible to set N3 to a very small value. Thus, when detecting that the link quality drops and the HO is to be performed, the UE may follow the short DRX cycle and need not have a continuous monitoring on the channel. Therefore, the UE is able to determine the preferred DRX status of the UE according to the measurement result and the DRX status determination mode. If the determined result does not accord with the current DRX status of the UE, the UE changes the DRX status of itself to the newly determined DRX status after sending an MR to the eNB.

FIG.10 is a schematic diagram illustrating an operation procedure of the third embodiment wherein the DRX status of the UE is dynamically adjusted through setting the same DRX status determination mode at both the UE and the network side. In the method shown in FIG.10, steps S1001-S1003 are regular measurement procedures and are similar to steps S201-S203 shown in FIG.2. In step S1001, the UE receives MC information from the source eNB. In step S1002, the UE measures the channel according to the MC information, determines a preferred DRX status of the UE according to the measurement result and sends an MR to the source eNB. In step S1003, the source eNB determines whether an HO to a neighboring cell is required according to the MR.

Thereafter, the UE measures the channel after receiving the MC information from the source eNB (step S1004), and sends an MR to the source eNB and determines the preferred DRX status of the UE according to the measurement result. The determination is performed by matching the DRX status determination mode pre-configured in the UE (step S1005). After receiving the MR sent by the UE, the source eNB matches the DRX status determination mode pre-configured in the network side according to the result of the MR in order to determine the preferred DRX status of the UE (step S1007). The DRX status determination mode in the source eNB should be consistent with the DRX status determination mode in the UE. For example, they may both adopt the determination mode shown in FIG.9. Since the UE has determined and updated the DRX status of itself after sending the MR, the source eNB may know the current DRX status of the UE using the same DRX status determination mode after receiving the MR containing the same measurement information. And the source eNB may also update the DRX status of the UE stored in DRX status register 82 using the current DRX status of the UE (step S1007). Thereafter, the source eNB determines whether an HO to a neighboring cell is required (step S1008). Similarly, the UE determines the preferred DRX status before sending the MR (step S1009, S1013). The source eNB determines the current DRX status of the UE and updates the DRX status of the UE according to the received MR (step S1011, S1015). Other operations are the same with those in conventional method.

In this embodiment, no information is added to the MC or the MR. It only needs to configure the same DRX status determination mode at the UE and the network side to achieve the purpose of dynamic adjustment of the DRX status of the UE, which reduces signaling overhead.

FIG.11 shows another example of the DRX status determination mode. In the example shown in FIG.11, the preferred DRX status of the UE is determined according to measurement report event types. The DRX status determination mode shown in FIG.9 and FIG.11 may be used in the DRX status determination unit 31,81 of the eNB and/or the DRX status determining and adjusting unit 66, 85 of the UE.

FIG.11 takes a trigger event for intra-frequency measurement as an example for illustrating the DRX status determination mode based on event types. The event types mentioned herein are the same as the measurement trigger events described in the background of the present invention, wherein Ps denotes the link quality of the serving cell, Pintra-f denotes the link quality of the neighboring cell with the same frequency, and Offset denotes an offset. If event 1) triggers an MR, the UE has less possibility of HO. Therefore, it is possible to make the UE stay with a long DRX cycle. While in case of event 2) and event 3), the UE is likely to hand over, so the UE is required to continuous monitor the channel or enter into a short DRX cycle. Herein, it is also possible to select according to service types. For example, as to voice services, select to continuously monitor the channel, whereas for non real-time services, the short DRX cycle may be adopted. In addition, as to an MR irrelevant to HO, i.e., the MR will not trigger the HO, such as the MR during the hysteresis time or the MR directed to load balancing and congestion control, etc., the UE may stay in the long DRX cycle or remain its DRX status. In conclusion, the DRX status determination mode is to determine the preferred DRX status of the UE according to the possibility of the HO of the UE and the service type. And the possibility of the HO may further be determined according to the measurement report event types, link quality, etc.

The present invention enables the network side to know the dynamic change of the DRX status of the UE. In the method of the first embodiment, the network side indicates the UE of the preferred DRX status, which makes it convenient for the network side to control the UE. In the second embodiment, the UE inform the network side of the change of the DRX status of the UE, which facilitates the flexible adjustment of the DRX status of the UE. Both the first embodiment and the second embodiment can be implemented through carrying the DRX, status information in existing information of the existing system. In the third embodiment, no information related to the DRX status needs to be exchanged between the UE and the network side, which eliminates the overhead brought out by the transmission of the DRX status information.

The present invention has been described with reference to the above preferred embodiments.

## Claims

1. A method for dynamically indicating a User Equipment, UE, in connected status to change a Discontinuous Reception, DRX, status, comprising:
selecting (S501), by an eNB, a preferred DRX status that the eNB prefers for the UE in dependence on a pre-defined condition, and sending (S502, S506) Measurement Configuration, MC, information containing information indicating the preferred DRX status to the UE if the eNB determines to change a DRX status of the UE; wherein the MC information is sent through Radio Resource Control, RRC, signaling;
measuring (S507) a channel by the UE in response to the MC information received, and changing (S503) the DRX status of the UE to the preferred DRX status indicated by the MC information after sending out a Measurement Report, MR, to the eNB;
wherein the pre-defined condition comprises: a link quality of a serving cell;
wherein when the eNB detects that the link quality of the serving cell is higher than a first threshold N1, determining by the eNB that the UE should follow a long DRX cycle, and the changing the DRX status of the UE to the preferred DRX status comprises: following the long DRX cycle by the UE;
when the eNB detects that the link quality of the serving cell is lower than a second threshold N2 but higher than a third threshold N3, determining by the eNB that the UE should follow a short DRX cycle and the changing the DRX status of the UE to the preferred DRX status comprises: following the short DRX cycle by the UE;
when the eNB detects that the link quality of the serving cell is lower than the third threshold N3, determining by the eNB that the UE should stay awake;
wherein N1>N2≥N3, and N2 and N3 are configured according to delay sensitivity of a service.

2. The method of claim 1, wherein the eNB indicates, according to an event type that triggers the UE to send out a Measurement Report, or according to link quality or a measurement result, or according to a service type of an ongoing service, the UE to change to the preferred DRX status.

3. The method of claim 1, further comprising:
storing, by the eNB, the preferred DRX status selected for the UE.

4. A system for dynamically indicating a User Equipment, UE, in connected status to change a Discontinuous Reception, DRX, status, comprising:
means configured at an eNB and means configured at the UE; wherein means configured at the eNB comprises:
a DRX status determination unit (31), adapted to select a preferred DRX status that the eNB prefers for the UE in dependence on a pre-defined condition;
a DRX status indication unit (32), adapted to send Measurement Configuration, MC, information containing information indicating the preferred DRX status to the UE through a first transmitting/receiving unit (34); wherein the MC information is sent through Radio Resource Control, RRC, signaling;
and
the first transmitting/receiving unit (34), adapted to transmit information to and receive information from the UE; and
means configured at the UE comprises:
a DRX status indication detecting unit (36), adapted to receive the MC information from a second transmitting/receiving unit (35), obtain the preferred DRX status indicated by the MC information and measure a channel in response to the MC information received;
a DRX status updating unit (37), adapted to change a DRX status of the UE to the preferred DRX status indicated by the MC information after sending out a Measurement Report, MR, to the eNB; and
the second transmitting/receiving unit (35), adapted to transmit information to and receive information from the eNB;
wherein the pre-defined condition comprises: a link quality of a serving cell;
wherein when the DRX status determination unit (31) of the eNB detects that the link quality of the serving cell is higher than a first threshold N1, the DRX status determination unit (31) of the eNB is configured to determine that the UE should follow a long DRX cycle, and the DRX status updating unit (37) of the UE is configured to update the DRX status of the UE to the long DRX cycle;
when the DRX status determination unit (31) of the eNB detects that the link quality of the serving cell is lower than a second threshold N2 but higher than a third threshold N3, the DRX status determination unit (31) of the eNB is configured to determine that the UE should follow a short DRX cycle and the DRX status updating unit (37) of the UE is configured to update the DRX status of the UE to the short DRX cycle;
when the DRX status determination unit (31) of the eNB detects that the link quality of the serving cell is lower than the third threshold N3, the DRX status determination unit (31) of the eNB determines that the UE should stay awake;
wherein N1>N2≥N3, and N2 and N3 are configured according to delay sensitivity of a service.

5. The system of claim 4, wherein the DRX status determination unit (31) is further adapted to compare the preferred DRX status with a DRX status previously stored in a DRX status register, and update the DRX status previously stored in the DRX status register to the preferred DRX status if the preferred DRX status is different from the DRX status previously stored in the DRX status register.

6. A method for dynamically indicating a User Equipment, UE, in connected status to change a Discontinuous Reception, DRX, status, comprising:
sending (S701), by an eNB, Measurement Configuration, MC, information to the UE in dependence on a pre-defined condition, wherein the MC information includes an instruction for instructing the UE to indicate a preferred DRX status that the UE prefers in a Measurement Report, MR;
measuring (S702) a channel by the UE in response to the MC information received, determining (S705) by the UE the preferred DRX status that the UE prefers in dependence on a pre-defined condition and sending (S702) to the eNB a Measurement Report including information that indicates the preferred DRX status that the UE prefers, and updating by the UE a DRX status of the UE to the preferred DRX status;
updating (S706), by the eNB, the DRX status of the UE stored in a DRX status register to the preferred DRX status received from the UE;
wherein when the UE detects that the link quality of the serving cell is higher than a first threshold N1, determining by the UE that the UE should follow a long DRX cycle, and the updating by the UE the DRX status of the UE to the preferred DRX status comprises: updating the DRX status of the UE to the long DRX cycle by the UE;
when the UE detects that the link quality of the serving cell is lower than a second threshold N2 but higher than a third threshold N3, determining by the UE that the UE should follow a short DRX cycle and the updating by the UE the DRX status of the UE to the preferred DRX status comprises: updating the DRX status of the UE to the short DRX cycle by the UE;
when the UE detects that the link quality of the serving cell is lower than the third threshold N3, determining by the UE that the UE should stay awake;
wherein N1>N2≥N3, wherein N2 and N3 are configured according to delay sensitivity of a service.

7. The method of claim 6, wherein only when the UE determines to change the DRX status of the UE, the information that indicates the preferred DRX status is included by the UE in each MR sent to the eNB, or is included by the UE in an MR sent to the eNB.

8. The method of claim 1 or 6, wherein the preferred DRX status is denoted using n bits and has 2*ⁿ* kinds of different values, wherein n is an integer.

9. A system for dynamically indicating a User Equipment, UE, in connected status to change a Discontinuous Reception, DRX, status, comprising:
means configured at an eNB and means configured at the UE; wherein means configured at the eNB comprises:
a DRX status indication informing unit (61), adapted to send Measurement Configuration, MC, information to the UE in dependence on a pre-defined condition, wherein the MC information includes an instruction for instructing the UE to indicate a preferred DRX status that the UE prefers in a Measurement Report, MR;
a DRX status updating unit (62), adapted to update a DRX status stored in a DRX status register to the preferred DRX status received from the UE; and
a first transmitting/receiving unit (64), adapted to transmit information to and receive information from the UE; and
means configured at the UE comprises:
a DRX status determining and adjusting unit (66), adapted to measure a channel by the UE in response to the MC information received, determine the preferred DRX status that the UE prefers in dependence on the pre-defined condition, and update the DRX status of the UE to the preferred DRX status;
a DRX status indicating unit (67), adapted to send to the eNB a Measurement Report including information that indicates the preferred DRX status that the UE prefers through a second transmitting/receiving unit (65);
the second transmitting/receiving unit (65), adapted to transmit information to and receive information from the eNB;
wherein when the DRX status determining and adjusting unit (66) of the UE detects that the link quality of the serving cell is higher than a first threshold N1, the DRX status determining and adjusting unit (66) of the UE is configured to determine that the UE should follow a long DRX cycle, and update the DRX status of the UE to the long DRX cycle;
when the DRX status determining and adjusting unit (66) of the UE detects that the link quality of the serving cell is lower than a second threshold N2 but higher than a third threshold N3, the DRX status determining and adjusting unit (66) of the UE is configured to determine that the UE should follow a short DRX cycle and update the DRX status of the UE to the short DRX cycle;
when the DRX status determining and adjusting unit (66) of the UE detects that the link quality of the serving cell is lower than the third threshold N3, the DRX status determining and adjusting unit (66) of the UE is configured to determine that the UE should stay awake;
wherein N1>N2≥N3, N2 and N3 are configured according to delay sensitivity of a service.

10. The system of claim 9, wherein the DRX determining and adjusting unit (66) is further adapted to compare the preferred DRX status that the UE prefers and the current DRX status of the UE, and adjust the DRX status of the UE if the current DRX status of the UE is different from the preferred DRX status.

11. A method for dynamically indicating a User Equipment, UE in connected status to change a Discontinuous Reception, DRX, status, comprising:
sending (S1001), by an eNB, Measurement Configuration, MC, information to the UE in dependence on a pre-defined condition;
measuring (S1004) a channel by the UE in response to the MC information received, sending a measurement result to the eNB, and determining (S1005) by the UE a preferred DRX status that the UE prefers according to the measurement result and a same DRX status determination mode which is respectively pre-stored at the eNB and the UE;
determining (S1007), by the eNB, a preferred DRX status that the eNB prefers for the UE according to the measurement result and the same DRX status determination mode which is respectively pre-stored at the eNB and the UE, and updating (S1015) a DRX status of the UE stored in a DRX status register to the preferred DRX status that the eNB prefers;
wherein when the eNB and the UE detect that the link quality of the serving cell is higher than a first threshold N1, determining by the eNB and the UE that the UE should follow a long DRX cycle, and following the long DRX cycle by the UE;
when the eNB and the UE detect that the link quality of the serving cell is lower than a second threshold N2 but higher than a third threshold N3, determining by the eNB and the UE that the UE should follow a short DRX cycle and following the short DRX cycle by the UE;
when the eNB and the UE detect that the link quality of the serving cell is lower than the third threshold N3, determining by the eNB and the UE that the UE should stay awake;
wherein N1>N2≥N3, N2 and N3 are configured according to delay sensitivity of a service.

12. The method of claim 11, wherein the same DRX status determination mode indicates a relation between the measurement result and the preferred DRX status.

13. The method of claim 1, 6 or 11, wherein when the link quality of the serving cell is higher than a pre-defined threshold, the eNB or the UE selects a discontinuous reception status;
when the link quality of the serving cell is higher than a pre-defined threshold or the sum of an offset and the link quality of the neighboring cell is higher than the link quality of the serving cell, the UE selects a short DRX cycle or a continuous reception status.

14. The method of claim 1, 6 or 11, wherein the preferred DRX status is selected from a discontinuous reception status and a continuous reception status; or
the preferred DRX status is selected from the following statuses: a continuous reception status, a long DRX cycle and a short DRX cycle; or
the preferred DRX status is selected from the following statuses: a discontinuous reception status, a continuous reception status, a long DRX cycle and a short DRX cycle.

15. A system for dynamically indicating a User Equipment, UE, in connected status to change a Discontinuous Reception, DRX, status, comprising:
means configured at an eNB side and means configured at the UE side; wherein means configured at the eNB side comprises:
a DRX status determination unit (81), adapted to send Measurement Configuration, MC, information to the UE in dependence on a pre-defined condition, receive information from the UE through a first transmitting/receiving unit (83), determine a preferred DRX status that the eNB prefers for the UE according to the measurement result and a same DRX status determination mode which is respectively pre-stored at the eNB and the UE, and update a DRX status of the UE stored in a DRX status register to the preferred DRX status that the eNB prefers; and
the first transmitting/receiving unit (83), adapted to transmit information to and receive information from the UE;
means configured at the UE side comprises:
a DRX status determining and adjusting unit (85), adapted to measure a channel in response to the MC information received, determine a preferred DRX status that the UE prefers according to the measurement result and a same DRX status determination mode which is respectively pre-stored at the eNB and the UE, and send a measurement result to the eNB through a second transmitting/receiving unit (84); and
the second transmitting/receiving unit (84), adapted to transmit information to and receive information from the eNB;
wherein when the DRX status determination unit (81) of the eNB and the DRX status determining and adjusting unit (85) of the UE detect that the link quality of the serving cell is higher than a first threshold N1, the DRX status determination unit (81) of the eNB and the DRX status determining and adjusting unit (85) of the UE are configured to determine that the UE should follow a long DRX cycle, and the DRX status determining and adjusting unit (85) of the UE is configured to follow the long DRX cycle;
when the DRX status determination unit (81) of the eNB and the DRX status determining and adjusting unit (85) of the UE detect that the link quality of the serving cell is lower than a second threshold N2 but higher than a third threshold N3, the DRX status determination unit (81) of the eNB and the DRX status determining and adjusting unit (85) of the UE are configured to determine that the UE should follow a short DRX cycle and the DRX status determining and adjusting unit (85) of the UE is configured to follow the short DRX cycle;
when the DRX status determination unit (81) of the eNB and the DRX status determining and adjusting unit (85) of the UE detect that the link quality of the serving cell is lower than the third threshold N3, the DRX status determination unit (81) of the eNB and the DRX status determining and adjusting unit (85) of the UE are configured to determine that the UE should stay awake;
wherein N1>N2≥N3, N2 and N3 are configured according to delay sensitivity of a service.

16. The system of claim 15, wherein the DRX status determining and adjusting unit (85) is further adapted to adjust the DRX status of the UE according to the determination result of the UE.

## Patentansprüche

1. Ein Verfahren zum dynamischen Anzeigen gegenüber einer Benutzereinrichtung, UE, in verbundenem Status, einen Status eines diskontinuierlichen Empfangs, DRX, zu ändern, das folgende Schritte aufweist:
Auswählen (S501) eines bevorzugten DRX-Status, den ein eNB für die UE bevorzugt, durch den eNB in Abhängigkeit von einer vordefinierten Bedingung und Senden (S502, S506) von Informationen einer Messkonfiguration, MC, die Informationen enthalten, die der UE den bevorzugten DRX-Status anzeigen, falls der eNB bestimmt, dass ein DRX-Status der UE geändert wird; wobei die MC-Informationen durch Signalisieren einer Funkressourcensteuerung, RRC, gesendet werden;
Messen (S507) eines Kanals durch die UE ansprechend auf die empfangenen MC-Informationen und Ändern (S503) des DRX-Status der UE in den bevorzugten DRX-Status, der durch die MC-Informationen angezeigt wird, nach Aussenden eines Messberichts, MR, an den eNB;
wobei die vordefinierte Bedingung Folgendes aufweist: eine Verbindungsqualität einer versorgenden Funkzone;
wobei dann, wenn der eNB feststellt, dass die Verbindungsqualität der versorgenden Funkzone höher als eine erste Schwelle N1 ist, durch den eNB bestimmt wird, dass die UE einem langen DRX-Zyklus folgen sollte, und das Ändern des DRX-Status der UE in den bevorzugten DRX-Status Folgendes aufweist: die UE folgt dem langen DRX-Zyklus;
wenn der eNB feststellt, dass die Verbindungsqualität der versorgenden Funkzone niedriger als eine zweite Schwelle N2, jedoch höher als eine dritte Schwelle N3 ist, durch den eNB bestimmt wird, dass die UE einem kurzen DRX-Zyklus folgen sollte, und das Ändern des DRX-Status der UE in den bevorzugten DRX-Status Folgendes aufweist: die UE folgt dem kurzen DRX-Zyklus;
wenn der eNB feststellt, dass die Verbindungsqualität der versorgenden Funkzone niedriger als die dritte Schwelle N3 ist, durch den eNB bestimmt wird, dass die UE wach bleiben sollte;
wobei N1 > N2 ≥ N3 ist und N2 und N3 gemäß einer Verzögerungsempfindlichkeit eines Dienstes konfiguriert sind.

2. Das Verfahren gemäß Anspruch 1, bei dem der eNB der UE gemäß einem Ereignistyp, der auslöst, dass die UE einen Messbericht aussendet, oder gemäß einer Verbindungsqualität oder einem Messergebnis oder gemäß einem Diensttyp eines laufenden Dienstes anzeigt, in den bevorzugten DRX-Status zu wechseln.

3. Das Verfahren gemäß Anspruch 1, das ferner folgenden Schritt aufweist:
Speichern des bevorzugten DRX-Status, der für die UE ausgewählt wird, durch den eNB.

4. Ein System zum dynamischen Anzeigen gegenüber einer Benutzereinrichtung, UE, in verbundenem Status, einen Status eines diskontinuierlichen Empfangs, DRX, zu ändern, das folgende Merkmale aufweist:
eine Einrichtung, die an einem eNB konfiguriert ist, und eine Einrichtung, die an der UE konfiguriert ist; wobei die an dem eNB konfigurierte Einrichtung folgende Merkmale aufweist:
eine DRX-Statusbestimmungseinheit (31), die angepasst ist, einen bevorzugten DRX-Status, den der eNB für die UE bevorzugt, in Abhängigkeit von einer vordefinierten Bedingung auszuwählen;
eine DRX-Statusanzeigeeinheit (32), die angepasst ist, Informationen einer Messkonfiguration, MC, die Informationen enthalten, die der UE den bevorzugten DRX-Status anzeigen, durch eine erste Sende-/Empfangseinheit (34) zu senden; wobei die MC-Informationen durch Signalisieren einer Funkressourcensteuerung, RRC, gesendet werden;
und
die erste Sende-/Empfangseinheit (34), die angepasst ist, Informationen an die UE zu senden und von derselben zu empfangen; und
die an der UE konfigurierte Einrichtung folgende Merkmale aufweist:
eine DRX-Statusanzeige-Erfassungseinheit (36), die angepasst ist, die MC-Informationen von einer zweiten Sende-/Empfangseinheit (35) zu empfangen, den bevorzugten DRX-Status, der durch die MC-Informationen angezeigt ist, zu erhalten und ansprechend auf die empfangenen MC-Informationen einen Kanal zu messen;
eine DRX-Statusaktualisierungseinheit (37), die angepasst ist, einen DRX-Status der UE nach Aussenden eines Messberichts, MR, an den eNB in den bevorzugten DRX-Status, der durch die MC-Informationen angezeigt ist, zu ändern; und
die zweite Sende-/Empfangseinheit (35), die angepasst ist, Informationen an den eNB zu senden und von demselben zu empfangen;
wobei die vordefinierte Bedingung Folgendes aufweist: eine Verbindungsqualität einer versorgenden Funkzone;
wobei dann, wenn die DRX-Statusbestimmungseinheit (31) des eNB feststellt, dass die die Verbindungsqualität der versorgenden Funkzone höher als eine erste Schwelle N1 ist, die DRX-Statusbestimmungseinheit (31) des eNB konfiguriert ist, zu bestimmen, dass die UE einem langen DRX-Zyklus folgen sollte, und die DRX-Statusaktualisierungseinheit (37) der UE konfiguriert ist, den DRX-Status der UE auf den langen DRX-Zyklus zu aktualisieren;
wenn die DRX-Statusbestimmungseinheit (31) des eNB feststellt, dass die Verbindungsqualität der versorgenden Funkzone niedriger als eine zweite Schwelle N2, jedoch höher als eine dritte Schwelle N3 ist, die DRX-Statusbestimmungseinheit (31) des eNB konfiguriert ist, zu bestimmen, dass die UE einem kurzen DRX-Zyklus folgen sollte, und die DRX-Statusaktualisierungseinheit (37) der UE konfiguriert ist, den DRX-Status der UE auf den kurzen DRX-Zyklus zu aktualisieren;
wenn die DRX-Statusbestimmungseinheit (31) des eNB feststellt, dass die Verbindungsqualität der versorgenden Funkzone niedriger als die dritte Schwelle N3 ist, die DRX-Statusbestimmungseinheit (31) des eNB bestimmt, dass die UE wach bleiben sollte;
wobei N1 > N2 ≥ N3 ist und N2 und N3 gemäß einer Verzögerungsempfindlichkeit eines Dienstes konfiguriert sind.

5. Das System gemäß Anspruch 4, bei dem die DRX-Statusbestimmungseinheit (31) ferner angepasst ist, den bevorzugten DRX-Status mit einem DRX-Status, der zuvor in einem DRX-Statusregister gespeichert wurde, zu vergleichen und den zuvor in dem DRX-Statusregister gespeicherten DRX-Status auf den bevorzugten DRX-Status zu aktualisieren, falls der bevorzugte DRX-Status von dem zuvor in dem DRX-Statusregister gespeicherten DRX-Status verschieden ist.

6. Ein Verfahren zum dynamischen Anzeigen gegenüber einer Benutzereinrichtung, UE, in verbundenem Status, einen Status eines diskontinuierlichen Empfangs, DRX, zu ändern, das folgende Schritte aufweist:
Senden (S701) von Informationen einer Messkonfiguration, MC, durch einen eNB an die UE in Abhängigkeit von einer vordefinierten Bedingung, wobei die MC-Informationen einen Befehl umfassen, der der UE befiehlt, einen bevorzugten DRX-Status, den die UE bevorzugt, in einem Messbericht, MR, anzuzeigen;
Messen (S702) eines Kanals durch die UE ansprechend auf die empfangenen MC-Informationen, Bestimmen (S705) des bevorzugten DRX-Status, den die UE bevorzugt, durch die UE in Abhängigkeit von einer vordefinierten Bedingung und Senden (S702) eines Messberichts an den eNB, der Informationen umfasst, die den bevorzugten DRX-Status anzeigen, den die UE bevorzugt, und Aktualisieren eines DRX-Status der UE durch die UE auf den bevorzugten DRX-Status;
Aktualisieren (S706) des DRX-Status der UE, der in einem DRX-Statusregister gespeichert ist, durch den eNB auf den bevorzugten DRX-Status, der von der UE empfangen wird;
wobei dann, wenn die UE feststellt, dass die Verbindungsqualität der versorgenden Funkzone höher als eine erste Schwelle N1 ist, durch die UE bestimmt wird, dass die UE einem langen DRX-Zyklus folgen sollte, und das Aktualisieren des DRX-Status der UE durch die UE auf den bevorzugten DRX-Status Folgendes aufweist:
Aktualisieren des DRX-Status der UE durch die UE auf den langen DRX-Zyklus;
wenn die UE feststellt, dass die Verbindungsqualität der versorgenden Funkzone niedriger als eine zweite Schwelle N2, jedoch höher als eine dritte Schwelle N3 ist, durch die UE bestimmt wird, dass die UE einem kurzen DRX-Zyklus folgen sollte, und das Aktualisieren des DRX-Status der UE durch die UE auf den bevorzugten DRX-Status Folgendes aufweist: Aktualisieren des DRX-Status der UE durch die UE auf den kurzen DRX-Zyklus;
wenn die UE feststellt, dass die Verbindungsqualität der versorgenden Funkzone niedriger als die dritte Schwelle N3 ist, durch die UE bestimmt wird, dass die UE wach bleiben sollte;
wobei N1 > N2 ≥ N3 ist, wobei N2 und N3 gemäß einer Verzögerungsempfindlichkeit eines Dienstes konfiguriert sind.

7. Das Verfahren gemäß Anspruch 6, bei dem nur dann, wenn die UE bestimmt, dass der DRX-Status der UE geändert wird, die Informationen, die den bevorzugten DRX-Status anzeigen, durch die UE in jedem MR, der an den eNB gesendet wird, enthalten sind oder durch die UE in einem MR, der an den eNB gesendet wird, enthalten sind.

8. Das Verfahren gemäß Anspruch 1 oder 6, bei dem der bevorzugte DRX-Status unter Verwendung von n Bits bezeichnet wird und 2*ⁿ* Arten von verschiedenen Werten aufweist, wobei n eine Ganzzahl ist.

9. Ein System zum dynamischen Anzeigen gegenüber einer Benutzereinrichtung, UE, in verbundenem Status, einen Status eines diskontinuierlichen Empfangs, DRX, zu ändern, das folgende Merkmale aufweist:
eine Einrichtung, die an einem eNB konfiguriert ist, und eine Einrichtung, die an der UE konfiguriert ist; wobei die an dem eNB konfigurierte Einrichtung folgende Merkmale aufweist:
eine DRX-Statusanzeige-Informationseinheit (61), die angepasst ist, Informationen einer Messkonfiguration, MC, in Abhängigkeit von einer vordefinierten Bedingung an die UE zu senden, wobei die MC-Informationen einen Befehl enthalten, der der UE befiehlt, einen bevorzugten DRX-Status, den die UE bevorzugt, in einem Messbericht, MR, anzuzeigen;
eine DRX-Statusaktualisierungseinheit (62), die angepasst ist, einen DRX-Status, der in einem DRX-Statusregister gespeichert ist, auf den bevorzugten DRX-Status, der von der UE empfangen wird, zu aktualisieren; und
eine erste Sende-/Empfangseinheit (64), die angepasst ist, Informationen an die UE zu senden und von derselben zu empfangen; und
die an der UE konfigurierte Einrichtung folgende Merkmale aufweist:
eine DRX-Statusbestimmungs- und -einstellungseinheit (66), die angepasst ist, einen Kanal durch die UE ansprechend auf die empfangenen MC-Informationen zu messen, den bevorzugten DRX-Status, den die UE bevorzugt, in Abhängigkeit von der vordefinierten Bedingung zu bestimmen und den DRX-Status der UE auf den bevorzugten DRX-Status zu aktualisieren;
eine DRX-Statusanzeigeeinheit (67), die angepasst ist, einen Messbericht, der Informationen umfasst, die den bevorzugten DRX-Status anzeigen, den die UE bevorzugt, durch eine zweite Sende-/Empfangseinheit (65) an den eNB zu senden;
die zweite Sende-/Empfangseinheit (65), die angepasst ist, Informationen an den eNB zu senden und von demselben zu empfangen;
wobei dann, wenn die DRX-Statusbestimmungs- und -einstellungseinheit (66) der UE feststellt, dass die Verbindungsqualität der versorgenden Funkzone höher als eine erste Schwelle N1 ist, die DRX-Statusbestimmungs- und -einstellungseinheit (66) der UE konfiguriert ist, zu bestimmen, dass die UE einem langen DRX-Zyklus folgen sollte, und den DRX-Status der UE auf den langen DRX-Zyklus zu aktualisieren;
wenn die DRX-Statusbestimmungs- und -einstellungseinheit (66) der UE feststellt, dass die Verbindungsqualität der versorgenden Funkzone niedriger als eine zweite Schwelle N2, jedoch höher als eine dritte Schwelle N3 ist, die DRX-Statusbestimmungs- und -einstellungseinheit (66) der UE konfiguriert ist, zu bestimmen, dass die UE einem kurzen DRX-Zyklus folgen sollte, und den DRX-Status der UE auf den kurzen DRX-Zyklus zu aktualisieren;
wenn die DRX-Statusbestimmungs- und -einstellungseinheit (66) der UE feststellt, dass die Verbindungsqualität der versorgenden Funkzone niedriger als die dritte Schwelle N3 ist, die DRX-Statusbestimmungs- und -einstellungseinheit (66) der UE konfiguriert ist, zu bestimmen, dass die UE wach bleiben sollte;
wobei N1 > N2 ≥ N3 ist, N2 und N3 gemäß einer Verzögerungsempfindlichkeit eines Dienstes konfiguriert sind.

10. Das System gemäß Anspruch 9, bei dem die DRX-Bestimmungs- und -einstellungseinheit (66) ferner angepasst ist, den bevorzugten DRX-Status, den die UE bevorzugt, und den aktuellen DRX-Status der UE zu vergleichen und den DRX-Status der UE einzustellen, falls der aktuelle DRX-Status der UE von dem bevorzugten DRX-Status verschieden ist.

11. Ein Verfahren zum dynamischen Anzeigen gegenüber einer Benutzereinrichtung, UE in verbundenem Status, einen Status eines diskontinuierlichen Empfangs, DRX, zu ändern, das folgende Schritte aufweist:
Senden (S1001) von Informationen einer Messkonfiguration, MC, durch einen eNB an die UE in Abhängigkeit von einer vordefinierten Bedingung;
Messen (S1004) eines Kanals durch die UE ansprechend auf die empfangenen MC-Informationen, Senden eines Messergebnisses an den eNB und Bestimmen (S1005) eines bevorzugten DRX-Status, den die UE bevorzugt, durch die UE gemäß dem Messergebnis und einem selben DRX-Statusbestimmungsmodus, der jeweils an dem eNB und der UE vorgespeichert ist;
Bestimmen (S1007) eines bevorzugten DRX-Status, den der eNB für die UE bevorzugt, durch den eNB gemäß dem Messergebnis und dem selben DRX-Statusbestimmungsmodus, der jeweils an dem eNB und der UE vorgespeichert ist, und Aktualisieren (S1015) eines DRX-Status der UE, der in einem DRX-Statusregister gespeichert ist, auf den bevorzugten DRX-Status, den der eNB bevorzugt;
wobei dann, wenn der eNB und die UE feststellen, dass die Verbindungsqualität der versorgenden Funkzone höher als eine erste Schwelle N1 ist, durch den eNB und die UE bestimmt wird, dass die UE einem langen DRX-Zyklus folgen sollte, und die UE dem langen DRX-Zyklus folgt;
wenn der eNB und die UE feststellen, dass die Verbindungsqualität der versorgenden Funkzone niedriger als eine zweite Schwelle N2, jedoch höher als eine dritte Schwelle N3 ist, durch den eNB und die UE bestimmt wird, dass die UE einem kurzen DRX-Zyklus folgen sollte, und die UE dem kurzen DRX-Zyklus folgt;
wenn der eNB und die UE feststellen, dass die Verbindungsqualität der versorgenden Funkzone niedriger als die dritte Schwelle N3 ist, durch den eNB und die UE bestimmt wird, dass die UE wach bleiben sollte;
wobei N1 > N2 ≥ N3 ist, N2 und N3 gemäß einer Verzögerungsempfindlichkeit eines Dienstes konfiguriert sind.

12. Das Verfahren gemäß Anspruch 11, bei dem der selbe DRX-Statusbestimmungsmodus eine Beziehung zwischen dem Messergebnis und dem bevorzugten DRX-Status anzeigt.

13. Das Verfahren gemäß Anspruch 1, 6 oder 11, bei dem, wenn die Verbindungsqualität der versorgenden Funkzone höher als eine vordefinierte Schwelle ist, der eNB oder die UE einen Status eines diskontinuierlichen Empfangs auswählt;
wenn die Verbindungsqualität der versorgenden Funkzone höher als eine vordefinierte Schwelle ist oder die Summe eines Versatzes ist und die Verbindungsqualität der benachbarten Funkzone höher als die Verbindungsqualität der versorgenden Funkzone ist, die UE einen kurzen DRX-Zyklus oder einen Status eines kontinuierlichen Empfangs auswählt.

14. Das Verfahren gemäß Anspruch 1, 6 oder 11, bei dem der bevorzugte DRX-Status aus einem Status eines diskontinuierlichen Empfangs und einem Status eines kontinuierlichen Empfangs ausgewählt wird; oder
der bevorzugte DRX-Status aus den folgenden Status ausgewählt wird: einem Status eines kontinuierlichen Empfangs, einem langen DRX-Zyklus und einem kurzen DRX-Zyklus; oder
der bevorzugte DRX-Status aus den folgenden Status ausgewählt wird: einem Status eines diskontinuierlichen Empfangs, einem Status eines kontinuierlichen Empfangs, einem langen DRX-Zyklus und einem kurzen DRX-Zyklus.

15. Ein System zum dynamischen Anzeigen gegenüber einer Benutzereinrichtung, UE, in verbundenem Status, einen Status eines diskontinuierlichen Empfangs, DRX, zu ändern, das folgende Merkmale aufweist:
eine Einrichtung, die an einer eNB-Seite konfiguriert ist, und eine Einrichtung, die an der UE-Seite konfiguriert ist; wobei die an der eNB-Seite konfigurierte Einrichtung folgende Merkmale aufweist:
eine DRX-Statusbestimmungseinheit (81), die angepasst ist, Informationen einer Messkonfiguration, MC, in Abhängigkeit von einer vordefinierten Bedingung an die UE zu senden, Informationen von der UE durch eine erste Sende-/Empfangseinheit (83) zu empfangen, einen bevorzugten DRX-Status, den der eNB für die UE bevorzugt, gemäß dem Messergebnis und einem selben DRX-Statusbestimmungsmodus zu bestimmen, der jeweils an dem eNB und der UE vorgespeichert ist, und einen DRX-Status der UE, der in einem DRX-Statusregister gespeichert ist, auf den bevorzugten DRX-Status, den der eNB bevorzugt, zu aktualisieren; und
die erste Sende-/Empfangseinheit (83), die angepasst ist Informationen an die UE zu senden und von derselben zu empfangen;
die an der UE-Seite konfigurierte Einrichtung folgende Merkmale aufweist:
eine DRX-Statusbestimmungs- und -einstellungseinheit (85), die angepasst ist, einen Kanal ansprechend auf die empfangenen MC-Informationen zu messen, einen bevorzugten DRX-Status, den die UE bevorzugt, gemäß dem Messergebnis und einem selben DRX-Statusbestimmungsmodus, der jeweils an dem eNB und der UE vorgespeichert ist, zu bestimmen und ein Messergebnis durch eine zweite Sende-/Empfangseinheit (84) an den eNB zu senden; und
die zweite Sende-/Empfangseinheit (84), die angepasst ist, Informationen an den eNB zu senden und von demselben zu empfangen;
wobei dann, wenn die DRX-Statusbestimmungseinheit (81) des eNB und die DRX-Statusbestimmungs- und -einstellungseinheit (85) der UE feststellen, dass die Verbindungsqualität der versorgenden Funkzone höher als eine erste Schwelle N1 ist, die DRX-Statusbestimmungseinheit (81) des eNB und die DRX-Statusbestimmungs- und -einstellungseinheit (85) der UE konfiguriert sind, zu bestimmen, dass die UE einem langen DRX-Zyklus folgen sollte, und die DRX-Statusbestimmungs- und - einstellungseinheit (85) der UE konfiguriert ist, dem langen DRX-Zyklus zu folgen;
wenn die DRX-Statusbestimmungseinheit (81) des eNB und die DRX-Statusbestimmungs- und -einstellungseinheit (85) der UE feststellen, dass die Verbindungsqualität der versorgenden Funkzone niedriger als eine zweite Schwelle N2, jedoch höher als eine dritte Schwelle N3 ist, die DRX-Statusbestimmungseinheit (81) des eNB und die DRX-Statusbestimmungs- und -einstellungseinheit (85) der UE konfiguriert sind, zu bestimmen, dass die UE einem kurzen DRX-Zyklus folgen sollte, und die DRX-Statusbestimmungs- und -einstellungseinheit (85) der UE konfiguriert ist, dem kurzen DRX-Zyklus zu folgen;
wenn die DRX-Statusbestimmungseinheit (81) des eNB und die DRX-Statusbestimmungs- und -einstellungseinheit (85) der UE feststellen, dass die Verbindungsqualität der versorgenden Funkzone niedriger als die dritte Schwelle N3 ist, die DRX-Statusbestimmungseinheit (81) des eNB und die DRX-Statusbestimmungs- und -einstellungseinheit (85) der UE konfiguriert sind, zu bestimmen, dass die UE wach bleiben sollte;
wobei N1 > N2 ≥ N3 ist, N2 und N3 gemäß einer Verzögerungsempfindlichkeit eines Dienstes konfiguriert sind.

16. Das System gemäß Anspruch 15, bei dem die DRX-Statusbestimmungs- und -einstellungseinheit (85) ferner angepasst ist, den DRX-Status der UE gemäß dem Bestimmungsergebnis der UE einzustellen.

## Revendications

1. Procédé pour indiquer dynamiquement à un Equipement d'Utilisateur, UE, à l'état connecté de changer un état de Réception Discontinue, DRX, comprenant le fait de:
sélectionner (S501), par un eNB, un état de DRX préféré que l'eNB préfère pour l'UE en fonction d'une condition prédéfinie, et envoyer (S502, S506) des informations de Configuration de Mesure, MC, contenant des informations indiquant l'état de DRX préféré à l'UE si l'eNB détermine de changer un état de DRX de l'UE; où les informations de MC sont envoyées par signalisation de Contrôle de Ressources Radio, RRC;
mesurer (S507) un canal par l'UE en réponse aux informations de MC reçues, et changer (S503) l'état de DRX de l'UE à l'état de DRX préféré indiqué par les informations de MC après l'envoi d'un Rapport de Mesure, MR, à l'eNB;
dans lequel la condition prédéfinie comprend: une qualité de liaison d'une cellule de desserte;
dans lequel, lorsque l'eNB détecte que la qualité de liaison de la cellule de desserte est supérieure à un premier seuil N1, déterminer par l'eNB que l'UE doit suivre un cycle long de DRX, et le changement de l'état de DRX de l'UE à l'état de DRX préféré comprend le fait de: suivre le cycle long de DRX par l'UE;
lorsque l'eNB détecte que la qualité de la liaison de la cellule de desserte est inférieure à un deuxième seuil N2, mais supérieure à un troisième seuil N3, déterminer par l'eNB que l'UE doit suivre un cycle court de DRX et le changement de l'état de DRX de l'UE à l'état de DRX préféré comprend le fait de: suivre le cycle court de DRX par l'UE;
lorsque l'eNB détecte que la qualité de liaison de la cellule de desserte est inférieure au troisième seuil N3, déterminer par l'eNB que l'UE doit rester éveillé;
où N1>N2≥N3, et N2 et N3 sont configurés selon la sensibilité au retard d'un service.

2. Procédé selon la revendication 1, dans lequel l'eNB indique, selon un type d'événement qui déclenche l'UE pour envoyer un Rapport de Mesure, ou selon la qualité de la liaison ou un résultat de mesure, ou selon un type de service d'un service en cours, à l'UE de changer à l'état de DRX préféré.

3. Procédé selon la revendication 1, comprenant par ailleurs le fait de:
mémoriser, par l'eNB, l'état de DRX préféré sélectionné pour l'UE.

4. Système pour indiquer dynamiquement à un Equipement d'Utilisateur, UE, à l'état connecté de changer un état de Réception Discontinue, DRX, comprenant:
un moyen configuré dans un eNB et un moyen configuré dans l'UE; où le moyen configuré dans l'eNB comprend:
une unité de détermination d'état de DRX (31), adaptée pour sélectionner un état de DRX préféré que l'eNB préfère pour l'UE en fonction d'une condition prédéfinie;
une unité d'indication d'état de DRX (32), adaptée pour envoyer les informations de Configuration de Mesure, MC, contenant des informations indiquant l'état de DRX préféré à l'UE par l'intermédiaire d'une première unité de transmission/réception (34); où les informations de MC sont envoyées par signalisation de Contrôle de Ressources Radio, RRC;
et
la première unité de transmission/réception (34), adaptée pour transmettre des informations à et recevoir des informations de l'UE; et
le moyen configuré dans l'UE comprend:
une unité de détection d'indication d'état de DRX (36), adaptée pour recevoir les informations de MC d'une deuxième unité de transmission/réception (35), obtenir l'état de DRX préféré indiqué par les informations de MC et mesurer un canal en réponse aux informations de MC reçues;
une unité de mise à jour d'état de DRX (37), adaptée pour changer un état de DRX de l'UE à l'état de DRX préféré indiqué par les informations de MC après avoir envoyé un Rapport de Mesure, MR, à l'eNB; et
la deuxième unité de transmission/réception (35), adaptée pour transmettre des informations à et recevoir des informations de l'eNB;
dans lequel la condition prédéfinie comprend: une qualité de liaison d'une cellule de desserte;
dans lequel, lorsque l'unité de détermination d'état de DRX (31) de l'eNB détecte que la qualité de liaison de la cellule de desserte est supérieure à un premier seuil N1, l'unité de détermination d'état de DRX (31) de l'eNB est configurée pour déterminer que l'UE doit suivre un cycle long de DRX, et l'unité de mise à jour d'état de DRX (37) de l'UE est configurée pour mettre à jour l'état de DRX de l'UE au cycle long de DRX;
lorsque l'unité de détermination d'état de DRX (31) de l'eNB détecte que la qualité de liaison de la cellule de desserte est inférieure à un deuxième seuil N2, mais supérieure à un troisième seuil N3, l'unité de détermination d'état de DRX (31) de l'eNB est configurée pour déterminer que l'UE doit suivre un cycle court de DRX et l'unité de mise à jour d'état de DRX (37) de l'UE est configurée pour mettre à jour l'état de DRX de l'UE au cycle court de DRX;
lorsque l'unité de détermination d'état de DRX (31) de l'eNB détecte que la qualité de liaison de la cellule de desserte est inférieure au troisième seuil N3, l'unité de détermination d'état de DRX (31) de l'eNB détermine que l'UE doit rester éveillé;
où N1>N2>N3, et N2 et N3 sont configurés selon la sensibilité au retard d'un service.

5. Système selon la revendication 4, dans lequel l'unité de détermination d'état de DRX (31) est par ailleurs adaptée pour comparer l'état de DRX préféré avec un état de DRX précédemment mémorisé dans un registre d'état de DRX et mettre à jour l'état de DRX précédemment enregistré dans le registre d'état de DRX à l'état de DRX préféré si l'état de DRX préféré est différent de l'état de DRX précédemment enregistré dans le registre d'état de DRX.

6. Procédé pour indiquer dynamiquement à un Equipement d'Utilisateur, UE, à l'état connecté de changer un état de Réception Discontinue, DRX, comprenant le fait de:
envoyer (S701), par un eNB, des informations de Configuration de Mesure, MC, à l'UE en fonction d'une condition prédéfinie, où les informations de MC comportent une instruction pour donner instruction à l'UE d'indiquer un statut de DRX préféré que l'UE préfère dans un Rapport de Mesure, MR;
mesurer (S702) un canal par l'UE en réponse aux informations de MC reçues, déterminer (S705) par l'UE l'état de DRX préféré que l'UE préfère en fonction d'une condition prédéfinie et envoyer (S702) à l'eNB un Rapport de Mesure comportant des informations qui indiquent l'état de DRX préféré que l'UE préfère, et mettre à jour par l'UE un état de DRX de l'UE à l'état de DRX préféré;
mettre à jour (S706), par l'eNB, l'état de DRX de l'UE mémorisé dans un registre d'état de DRX à l'état de DRX préféré reçu de l'UE;
dans lequel, lorsque l'UE détecte que la qualité de liaison de la cellule de desserte est supérieure à un premier seuil N1, déterminer par l'UE que l'UE doit suivre un cycle long de DRX, et la mise à jour par l'UE de l'état de DRX de l'UE à l'état de DRX préféré comprend le fait de: mettre à jour l'état de DRX de l'UE au cycle long de DRX par l'UE;
lorsque l'UE détecte que la qualité de la liaison de la cellule de desserte est inférieure à un deuxième seuil N2, mais supérieure à un troisième seuil N3, déterminer par l'UE que l'UE doit suivre un cycle court de DRX et la mise à jour par l'UE de l'état de DRX de l'UE à l'état de DRX préféré comprend le fait de: mettre à jour l'état de DRX de l'UE au cycle court de DRX par l'UE;
lorsque l'UE détecte que la qualité de la liaison de la cellule de desserte est inférieure au troisième seuil N3, déterminer par l'UE que l'UE doit rester éveillé;
où N1>N2>N3, où N2 et N3 sont configurés selon la sensibilité au retard d'un service.

7. Procédé selon la revendication 6, dans lequel, uniquement lorsque l'UE détermine de changer l'état de DRX de l'UE, les informations qui indiquent l'état de DRX préféré sont incluses par l'UE dans chaque MR envoyé à l'eNB ou sont incluses par l'UE dans un MR envoyé à l'eNB.

8. Procédé selon la revendication 1 ou 6, dans lequel l'état de DRX préféré est désigné à l'aide de n bits et présente 2" types de valeurs différentes, où n est un nombre entier.

9. Système pour indiquer dynamiquement à un Equipement d'Utilisateur, UE, à l'état connecté, de changer un état de Réception Discontinue, DRX, comprenant:
un moyen configuré dans un eNB et un moyen configuré dans l'UE; où le moyen configuré dans l'eNB comprend:
une unité d'information d'indication d'état de DRX (61) adaptée pour envoyer des informations de Configuration de Mesure, MC, à l'UE en fonction d'une condition prédéfinie, où les informations de MC comportent une instruction pour donner instruction à l'UE d'indiquer un état de DRX préféré que le l'UE préfère dans un Rapport de Mesure, MR;
une unité de mise à jour d'état de DRX (62), adaptée pour mettre à jour un état de DRX mémorisé dans un registre d'état de DRX à l'état de DRX préféré reçu de l'UE; et
une première unité de transmission/réception (64), adaptée pour transmettre des informations à et recevoir des informations de l'UE; et
le moyen configuré dans l'UE comprend:
une unité de détermination et d'ajustement d'état de DRX (66), adaptée pour mesurer un canal par l'UE en réponse aux informations de MC reçues, déterminer l'état de DRX préféré que l'UE préfère en fonction de la condition prédéfinie et mettre à jour l'état de DRX de l'UE à l'état de DRX préféré;
une unité d'indication d'état de DRX (67), adaptée pour envoyer à l'eNB un Rapport de Mesure comportant des informations qui indiquent l'état de DRX préféré que l'UE préfère à travers une deuxième unité de transmission/réception (65);
la deuxième unité de transmission/réception (65), adaptée pour transmettre des informations à et recevoir des informations de l'eNB;
dans lequel, lorsque l'unité de détermination et d'ajustement d'état de DRX (66) de l'UE détecte que la qualité de liaison de la cellule de desserte est supérieure à un premier seuil N1, l'unité de détermination et d'ajustement d'état de DRX (66) de l'UE est configurée pour déterminer que l'UE doit suivre un cycle long de DRX et mettre à jour l'état de DRX de l'UE au cycle long de DRX;
lorsque l'unité de détermination et d'ajustement d'état de DRX (66) de l'UE détecte que la qualité de liaison de la cellule de desserte est inférieure à un deuxième seuil N2, mais supérieure à un troisième seuil N3, l'unité de détermination et d'ajustement d'état de DRX (66) de l'UE est configurée pour déterminer que l'UE doit suivre un cycle court de DRX et mettre à jour l'état de DRX de l'UE au cycle court de DRX;
lorsque l'unité de détermination et d'ajustement d'état de DRX (66) de l'UE détecte que la qualité de liaison de la cellule de desserte est inférieure au troisième seuil N3, l'unité de détermination et d'ajustement d'état de DRX (66) de l'UE est configurée pour déterminer que l'UE doit rester éveillé;
où N1>N2>N3, N2 et N3 sont configurés selon la sensibilité au retard d'un service.

10. Système selon la revendication 9, dans lequel l'unité de détermination et d'ajustement de DRX (66) est par ailleurs adaptée pour comparer l'état de DRX préféré que l'UE préfère et l'état de DRX actuel de l'UE, et pour ajuster l'état de DRX de l'UE si le l'état de DRX actuel de l'UE est différent de l'état de DRX préféré.

11. Procédé pour indiquer dynamiquement à un Equipement d'Utilisateur, UE, à l'état connecté, de changer un état de Réception Discontinue, DRX, comprenant le fait de:
envoyer (S1001), par un eNB, des informations de Configuration de Mesure, MC, à l'UE en fonction d'une condition prédéfinie;
mesurer (S1004) un canal par l'UE en réponse aux informations de MC reçues, envoyer un résultat de mesure à l'eNB et déterminer (S1005) par l'UE un état de DRX préféré que l'UE préfère selon le résultat de la mesure et un même mode de détermination d'état de DRX qui est respectivement pré-mémorisé dans l'eNB et dans l'UE;
déterminer (S1007), par l'eNB, un état de DRX préféré que l'eNB préfère pour l'UE selon le résultat de mesure et du même mode de détermination d'état de DRX qui est respectivement pré-mémorisé dans l'eNB et dans l'UE et mettre à jour (S1015) un état de DRX de l'UE mémorisé dans un registre d'état de DRX à l'état de DRX préféré que l'eNB préfère;
dans lequel, lorsque l'eNB et l'UE détectent que la qualité de liaison de la cellule de desserte est supérieure à un premier seuil N1, déterminer par l'eNB et par l'UE que l'UE doit suivre un cycle long de DRX et suivre le cycle long de DRX par l'UE;
lorsque l'eNB et l'UE détectent que la qualité de liaison de la cellule de desserte est inférieure à un deuxième seuil N2, mais supérieure à un troisième seuil N3, déterminer par l'eNB et par l'UE que l'UE doit suivre un cycle court de DRX et suivre le cycle court de DRX par l'UE;
lorsque l'eNB et l'UE détectent que la qualité de liaison de la cellule de desserte est inférieure au troisième seuil N3, déterminer par l'eNB et par l'UE que l'UE doit rester éveillé;
où N1>N2≥N3, N2 et N3 sont configurés selon la sensibilité au retard d'un service.

12. Procédé selon la revendication 11, dans lequel le même mode de détermination d'état de DRX indique un rapport entre le résultat de mesure et l'état de DRX préféré.

13. Procédé selon la revendication 1, 6 ou 11, dans lequel, lorsque la qualité de liaison de la cellule de desserte est supérieure à un seuil prédéfini, l'eNB ou l'UE sélectionne un état de réception discontinue;
lorsque la qualité de liaison de la cellule de desserte est supérieure à un seuil prédéfini ou la somme d'un décalage et de la qualité de liaison de la cellule voisine est supérieure à la qualité de liaison de la cellule de desserte, l'UE sélectionne un cycle court de DRX ou un état de réception continue.

14. Procédé selon la revendication 1, 6 ou 11, dans lequel l'état de DRX préféré est sélectionné parmi un état de réception discontinue et un état de réception continue; ou
l'état de DRX préféré est sélectionné parmi les états suivants: un état de réception continue, un cycle long de DRX et un cycle court de DRX; ou
l'état de DRX préféré est sélectionné parmi les états suivants: un état de réception discontinue, un état de réception continue, un cycle long de DRX et un cycle court de DRX.

15. Système pour indiquer dynamiquement à un Equipement d'Utilisateur, UE, à l'état connecté, de changer un état de Réception Discontinue, DRX, comprenant:
un moyen configuré d'un côté de l'eNB et un moyen configuré du côté de l'UE; où le moyen configuré du côté de l'eNB comprend:
une unité de détermination d'état de DRX (81), adaptée pour envoyer des informations de Configuration de Mesure, MC, à l'UE en fonction d'une condition prédéfinie, recevoir des informations de l'UE à travers une première unité de transmission/réception (83), déterminer un état de DRX préféré que l'eNB préfère pour l'UE selon le résultat de mesure et un même mode de détermination d'état de DRX qui est respectivement pré-mémorisé dans l'eNB et dans l'UE et mettre à jour un état de DRX de l'UE mémorisé dans un registre d'état de DRX à l'état de DRX préféré que l'eNB préfère; et
la première unité de transmission/réception (83), adaptée pour transmettre des informations à et recevoir des informations de l'UE;
le moyen configuré du côté de l'UE comprend:
une unité de détermination et d'ajustement d'état de DRX (85), adaptée pour mesurer un canal en réponse aux informations de MC reçues, déterminer un état de DRX préféré que l'UE préfère selon le résultat de mesure et un même mode de détermination d'état de DRX qui est respectivement pré-mémorisé dans l'eNB et dans l'UE, et envoyer un résultat de mesure à l'eNB à travers une deuxième unité de transmission/réception (84); et
la deuxième unité de transmission/réception (84), adaptée pour transmettre des informations à et recevoir des informations de l'eNB;
dans lequel, lorsque l'unité de détermination d'état de DRX (81) de l'eNB et l'unité de détermination et d'ajustement d'état de DRX (85) de l'UE détectent que la qualité de liaison de la cellule de desserte est supérieure à un premier seuil N1, l'unité de détermination d'état de DRX (81) de l'eNB et l'unité de détermination et d'ajustement de l'état de DRX (85) de l'UE sont configurées pour déterminer que l'UE doit suivre un cycle long de DRX et l'unité de détermination et d'ajustement d'état de DRX (85) de l'UE est configurée pour suivre le cycle long de DRX;
lorsque l'unité de détermination d'état de DRX (81) de l'eNB et l'unité de détermination et d'ajustement d'état de DRX (85) de l'UE détectent que la qualité de liaison de la cellule de desserte est inférieure à un deuxième seuil N2, mais supérieure à un troisième seuil N3, l'unité de détermination d'état de DRX (81) de l'eNB et l'unité de détermination et d'ajustement d'état de DRX (85) de l'UE sont configurées pour déterminer que l'UE doit suivre un cycle court de DRX et l'unité de détermination et d'ajustement d'état de DRX (85) de l'UE est configurée pour suivre le cycle court de DRX;
lorsque l'unité de détermination d'état de DRX (81) de l'eNB et l'unité de détermination et d'ajustement d'état de DRX (85) de l'UE détectent que la qualité de liaison de la cellule de desserte est inférieure au troisième seuil N3, l'unité de détermination d'état de DRX (81) de l'eNB et l'unité de détermination et d'ajustement d'état de DRX (85) de l'UE sont configurées pour déterminer que l'UE doit rester éveillé;
où N1>N2≥N3, N2 et N3 sont configurés selon la sensibilité au retard d'un service.

16. Système selon la revendication 15, dans lequel l'unité de détermination et d'ajustement d'état de DRX (85) est par ailleurs adaptée pour ajuster l'état de DRX de l'UE selon le résultat de détermination de l'UE.
